(19) Europäisches Patentamt
European Patent Office
Office européen des brevets

(11) EP 4 550 266 A1

(12) EUROPÄISCHE PATENTANMELDUNG

(43) Veröffentlichungstag:
07.05.2025 Patentblatt 2025/19

(21) Anmeldenummer: 23207739.6

(22) Anmeldetag: 03.11.2023

(51) Internationale Patentklassifikation (IPC):
G06T 7/593 (2017.01)

(52) Gemeinsame Patentklassifikation (CPC):
G06T 7/593

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
KH MA MD TN

(71) Anmelder: SensoPart Industriesensorik GmbH
79288 Gottenheim (DE)

(72) Erfinder:
• Giesecke, Johannes
79117 Freiburg (DE)
• Trenkle, Jochen
79224 Umkirch (DE)
• Araya Martinez, Jose Moises
70176 Stuttgart (DE)

(74) Vertreter: Mertzlufft-Paufler, Cornelius et al
Maucher Jenkins
Patent- und Rechtsanwälte
Urachstraße 23
79102 Freiburg im Breisgau (DE)

(54) VERFAHREN ZUR ERZEUGUNG VON TIEFENBILDERN

(57) Verfahren zur Erzeugung von Tiefenbildern, wobei mit wenigstens zwei Kameras (5, 6) Bilder einer Szene (4) aufgenommen werden, wobei die Kameras (5, 6) jeweils einen Bildsensor aufweisen, der pixelweise ausgelesen wird, wobei aus inhaltlichen Korrespondenzen zwischen den Bildern eine Tiefeninformation abgeleitet wird, wobei zur Bestimmung der inhaltlichen Korrespondenzen semiglobale Glattheitsbedingungen verwendet werden. Das Verfahren ist dadurch gekennzeichnet, dass die Tiefenberechnung zu jedem Pixel entlang der Ausleserichtung der beiden Kameras (5, 6) fortschreitet, dass jeweils für eine ganze Zahl k>1 entlang der Ausleserichtung benachbarter Pixel die rekursive Berechnung der Pfadkosten eines jeden der $N \geq k$ eindimensionalen Glattheitspfade einmalig an einem dieser k Pixel erfolgt, und dass eine Kostenaggregation für jedes Pixel dieses k-Tupels sich aus seiner lokalen Kostenfunktion sowie aus allen N auf das k-Tupel entfallenden Pfadkostenfunktionen zusammensetzt, (vgl.

Fig. 1

EP 4 550 266 A1

**Beschreibung**

Die Erfindung beschreibt ein Verfahren zur Erzeugung von Tiefenbildern, wobei mit wenigstens zwei Kameras Bilder einer Szene aufgenommen werden, wobei die Kameras jeweils einen Bildsensor aufweisen, der pixelweise ausgelesen wird, wobei aus inhaltlichen Korrespondenzen zwischen den Bildern eine Tiefeninformation abgeleitet wird, wobei zur Bestimmung der inhaltlichen Korrespondenzen semiglobale Glattheitsbedingungen verwendet werden.

Solche Verfahren zur Erzeugung von Tiefenbildern, wobei mit wenigstens zwei Kameras Bilder einer Szene aufgenommen werden, werden vielfältig etwa in industriellen Anlagen eingesetzt. Hierbei wird aus inhaltlichen Korrespondenzen zwischen jeweils zwei Bildern einer Szene eine Tiefeninformation abgeleitet.

Eine stereoskopische Tiefenbild-Berechnungsmethode mit besonders hoher Genauigkeit pro Berechnungsaufwand ist das sogenannte Semiglobal Matching (SGM), bei dem Glattheitsbedingungen entlang definierter, eindimensionaler Glattheitspfade erzwungen werden und sich rekursiv über die Bildfläche hin zu jedem Pixel der Tiefenbildberechnung fortpflanzen.

Ein solches SGM-Verfahren wurde erstmals beschrieben in H. Hirschmüller, IEEE Conference on Computer Vision and Pattern Recognition, San Diego, 2005, pp. 807-814. Diese Veröffentlichung bildet die Grundlage für praktisch alle gattungsgemäßen Tiefenbild-Berechnungsverfahren.

Die Aufgabe der Erfindung ist es, ein gattungsgemäßes Verfahren zur Erzeugung von Tiefenbildern zu verbessern und zu vereinfachen, so dass es vor allem mit weniger Ressourcen einsetzbar ist.

Diese Aufgabe wird durch die Verfahren mit den Merkmalen der unabhängigen Ansprüche gelöst.

Eine Ausführung der Erfindung ist demnach dadurch gekennzeichnet, dass die Tiefenberechnung zu jedem Pixel entlang der Ausleserichtung der beiden Kameras fortschreitet, dass jeweils für eine ganze Zahl $k>1$ entlang der Ausleserichtung benachbarter Pixel die rekursive Berechnung der Pfadkosten eines jeden der $N \geq k$ eindimensionalen Glattheitspfade einmalig an einem dieser $k$ Pixel erfolgt, und dass eine Kostenaggregation für jedes Pixel dieses $k$-Tupels sich aus seiner lokalen Kostenfunktion sowie aus der Menge aller $N$ auf das $k$-Tupel entfallenden Pfadkostenfunktionen zusammensetzt.

Erfindungsgemäß wird also nicht für jedes interessierende Pixel eine Anzahl $N$ Glattheitspfade berechnet. Sondern die $N$ Glattheitspfade werden nur für jedes $k$-Tupel aus $k$ Pixeln berechnet. Der Berechnungsaufwand reduziert sich somit um einen Faktor $k$ gegenüber dem rekursiven Verfahren im Stand der Technik. Der Vorteil dabei besteht darin, dass auch leistungsschwächere Hardware eine solche Berechnung ausführen kann.

Der Erfindung liegt die Erkenntnis zugrunde, dass die Streuung gleichgerichteter Pfadkostenfunktionen aller Pixel innerhalb eines $k$-Tupels meist gering genug ist, so dass deren Information für diese Pixel dann im Wesentlichen redundant ist. Durch nur einmalige Berechnung einer Pfadrichtung in einem $k$-Tupel entsteht somit insgesamt ein nahezu vernachlässigbarer Informationsverlust. Dieser bleibt selbst in Gegenwart hochfrequenter örtlicher Modulation der Bildtiefe unerheblich, da jede matchingbasierte Tiefenberechnungsmethode in diesem nichtredundanten Fall selbst hohem Stress und damit hoher Ungenauigkeit ausgesetzt ist.

Im Stand der Technik sind beispielsweise $N=8$ Pfadrichtungen beschrieben, für die Pfadkosten rekursiv berechnet und in der Kostenaggregation für jedes Pixel berücksichtigt werden.

Erfindungsgemäß können nun die $N$, also beispielsweise acht, Pfadrichtungen auf die $k$ Pixel eines $k$-Tupels beliebig verteilt sein. Beispielsweise kann ein $k$-Tupel zehn Pixel umfassen. Es können nun etwa für Pixel 1 des 10-Tupels alle acht Pfadrichtungen berechnet werden und diese Pfadkosten für alle weiteren neun Pixel des 10-Tupels verwendet werden. Oder für Pixel 1 und 5 des 10-Tupels werden jeweils vier Pfadkosten berechnet, wobei jedoch jede Pfadrichtung nur einmal berechnet wird.

Die Kostenaggregation eilt der Pfadkostenberechnung erfindungsgemäß mindestens um $k$ Pixel nach. In einer vorteilhaften Ausführung eilt die Kostenaggregation der Pfadkostenberechnung um eine Bildzeile hinterher. Der Vorteil besteht hier darin, dass der Parallelisierungsgrad bei der Pfadkostenberechnung im FPGA keinerlei zeitlichen Randbedingungen unterliegt, was der Implementierungseffizienz zugutekommt.

Es kann auch jede beliebige andere Zuordnung aller $N$ Pfadrichtungen auf die Pixel im $k$-Tupel gewählt werden.

Dabei ist es vorteilhaft, wenn die Anzahl $k$ der Pixel innerhalb eines $k$-Tupels nicht zu groß wird, und insbesondere kleiner als 10 ist.

In einer vorteilhaften Ausführung ist die Anzahl $N$ der Pfadrichtungen ganzzahlig teilbar durch die Anzahl $k$ der Pixel eines $k$-Tupels der Kostenaggregation. Dadurch ergibt sich, dass die Anzahl der Pixel $k$ maximal gleich ist zur Anzahl der Pfadrichtungen. Der Vorteil dabei ist, dass die Anzahl $k$ der Pixel im $k$-Tupel limitiert ist, wodurch die Ungenauigkeit beschränkt wird.

Zudem kann eine einfachere Zuordnung zwischen Pfadrichtungen und Pixeln innerhalb des $k$-Tupels erfolgen.

Praktisch bedeutet dies, dass etwa für eine Anzahl $N=8$, die Anzahl $k$ 8, 4 oder 2 betragen kann. $k=1$ wäre möglich, stellt jedoch den Stand der Technik dar.

In einer Ausführung ist jedem Pixel wenigstens eine Pfadrichtung zugeordnet. Der Vorteil besteht darin, dass die Last der Pfadkostenberechnung zeitlich gleichmäßiger verteilt ist. Insbesondere ist hier eine gleichmäßige Zuordnung der Pfadrichtungen zu den Pixeln vorteilhaft. Mit beispielsweise N=8 und k=4 wären dann etwa jedem Pixel zwei Pfadrichtungen zugeordnet.

In einer besonders vorteilhaften Ausführung sind N=4 Pfadrichtungen vorhanden. Diese vier Pfadrichtungen sind ein Kompromiss gegenüber den im Stand der Technik beschriebenen mindestens acht Pfadrichtungen, wodurch sich der Berechnungsaufwand zusätzlich halbieren lässt. Es hat sich nämlich gezeigt, dass auch bei nur vier Pfadrichtungen eine für viele Anwendungen ausreichende Genauigkeit gegeben ist. Dadurch ergibt sich die Anzahl k der Pixel in einem k-Tupel zu entweder 2 oder 4.

In einer besonders vorteilhaften Ausführung ist die Anzahl k der Pixel eines k-Tupels identisch zur Anzahl N der Pfadrichtungen. Auf diese Weise ergibt sich ein sehr guter Kompromiss aus Berechnungseffizienz und Genauigkeit. Zudem ist die Zuordnung zwischen Pfadrichtungen und Pixeln einfacher.

In einer vorzugsweisen Ausführung sind dabei jedem Pixel eines k-Tupels genau eine der N Pfadrichtungen zugeordnet. Auf diese Weise ergibt sich eine gleichmäßige zeitliche Verteilung der Rechenlast zur Berechnung der Pfadkosten, so dass insgesamt die Ressourcenanforderung geringgehalten ist.

Dabei können die N Pfadrichtungen in jedem k-Tupel in einer festgelegten Reihenfolge den Pixeln zugeordnet sein. Diese Reihenfolge kann für jedes k-Tupel identisch sein.

In einer alternativen, vorteilhaften Ausführung erfolgt die Zuordnung der Pfade zu den Pixeln der k-Tupel jedoch gemäß einem Pfadmuster, in dem verschiedene Reihenfolgen der Pfadrichtungen im k-Tupel alternieren. Auf diese Weise ist der Anspruch einer möglichst gleichmäßigen Verteilung der Pfade auf die Pixel des k-Tupels mit möglichst geradlinigen Pfadverläufen vereinbar.

Das Pfadmuster kann dabei aus einer Einheitszelle bestehen, die jeweils horizontal und vertikal aneinandergereiht wird, und so das Pfadmuster für ein ganzes Bild bildet.

Besonders vorteilhaft ist es, wenn N=k=4 gilt. Auf diese Weise ist eine sehr effiziente und ressourcenschonende Berechnung ermöglicht, die zudem eine Genauigkeit besitzt, die keine signifikant messbaren Unterschiede zu aufwändigeren Berechnungsverfahren besitzt.

In einer Ausführung sind die N Pfadrichtungen so gewählt, dass (bei bildzeilenweiser Auslesung) entlang jeder der N Pfadrichtungen der nächste Pfadnachbar zur jeweils berechneten Bildzeile außerhalb dieser Bildzeile liegt. Dies hat den Vorteil, dass eine rekursive Berechnung der Pfadkosten vor allem nicht entlang der Ausleserichtung der Bildzeile erfolgt, so dass die Anforderung an die Geschwindigkeit der Berechnung hier reduziert ist.

In einer Ausführung sind die Winkel zwischen den N Pfadrichtungen im Wesentlichen gleich und/oder in der Halbebene bekannter Bildinformation gleichverteilt. Dies hat den Vorteil, dass die Pfadrichtungen ein Bild gleichmäßig abdecken und somit Bildinformation aus allen Richtungen in gleicher Gewichtung berücksichtigen.

Bei innerhalb der Halbebene bekannter Bildinformation gleichverteilten Pfadwinkeln liegt es gemäß obiger Ausführung zunächst nahe, ausgehend von einem ersten, in Ausleserichtung pro Bildzeile von links nach rechts verlaufenden, Pfad alle Pfade möglichst geradlinig mit relativen Winkeln von jeweils ungefähr n/N rad zueinander verlaufen zu lassen. In einer Ausführung des erfindungsgemäßen Verfahrens ist es jedoch zweckmäßig, wenn alle Pfadrichtungen etwa um einen Winkel von $-\pi/2N$ rad gedreht sind. Dies ermöglicht den Bezug aller N Pfade auf nächste Nachbarn außerhalb der Bildzeile der aktuellen Pfadkostenberechnung, wodurch die zeitlichen Anforderungen der Pfadkostenberechnung wesentlich entspannt werden.

In einer Ausführung setzen sich die Glattheitspfade, vorzugsweise möglichst geradlinig, über die Bildfläche fort, wobei dies insbesondere im Fall N=k=4 durch vier Glattheitspfade realisiert ist, deren zwei Glattheitspfade jeweils um $\pm2$ Pixelspalten pro Bildzeile propagieren, und deren zwei verbleibende Glattheitspfade sich durch eine Sprungsequenz auszeichnen, die sich periodisch wiederholend jeweils um $\{\pm1, \mp1, \pm2\}$ Spalten pro Bildzeile propagiert. Auf diese Weise entsteht ein Pfadmuster für ein Bild, das möglichst geradlinige Pfadpropagation mit der Anforderung vereint, jedem Bildpixel genau einen Glattheitspfad zuzuweisen und dabei dennoch stets vollständige und abgeschlossene k-Tupel für die Kostenaggregation zu erzeugen.

In einer Ausführung ist die Einteilung der jeweils k benachbarten Pixel eines k-Tupels durch maximale Richtungstreue der Kostenaggregation geleitet, wobei dies insbesondere im Fall N=k=4 durch einen Halbverband aus k-Tupeln realisiert ist, deren linkes und rechtes Randpixel jeweils am stärksten nach rechts beziehungsweise links ausgerichtete Pfadkosten vererbt.

In einer Ausführung eilt die Kostenaggregation der Pfadkostenberechnung um eine Bildzeile entlang der Ausleserichtung nach, wodurch der Kostenaggregation Pfadinformation entgegen der Ausleserichtung erschlossen wird, wobei bereits berechnete Pfadkosten sowohl aus der Kostenaggregation entlang der Ausleserichtung vorgelagerten als auch nachgelagerten Bildzeilen zur Kostenaggregation verwendet werden. Auf diese Weise kann auch Bildinformation aus Richtungen des noch nicht ausgelesenen Bildteils berücksichtigt werden, wodurch sich die Genauigkeit der Tiefenberechnung zusätzlich erhöht.

Die Erfindung umfasst auch eine alternative Ausführung, die dadurch gekennzeichnet ist, dass die Aggregation der Pfadkosten pro Pixel sich aus nichtrekursiv berechneten Glattheitspfaden definierter Pfadlänge speist, und dass die Kostenaggregation eines Pixels sich aus seiner lokalen Kostenfunktion, sowie aus den Pfadkostenfunktionen aller zu diesem Pixel hinführenden Glattheitspfade zusammensetzt. Diese Ausführung unterscheidet sich durch eine nichtrekursive Berechnung der Glattheitspfade. Die Erfindung hat nämlich erkannt, dass ab einer bestimmten Pfadlänge die Genauigkeit nicht mehr wesentlich zunimmt. Daher erfolgt die Berechnung der Pfadkosten in dieser Ausführung nur bis zu dieser Pfadlänge, was die Genauigkeit der Tiefenberechnung stark verbessert, da dadurch auch für entlang der Ausleserichtung fortschreitende Berechnungsverfahren Information aus Pfadrichtungen der dunklen Halbebene gleichwertig einfließt.

In einer vorteilhaften Ausführung orientiert sich die Pfadlänge an der charakteristischen Sprungantworttiefe der Pfadkostenfunktion. Diese charakteristische Sprungantworttiefe ist eine Pixelzahl oder Pfadlänge, ab der sich etwa ein Disparitätssprung in den Pfadkosten durchsetzt. Die Pfadlänge bis zu der die Pfadkosten berechnet werden kann beispielsweise als die nächstgrößere ganze Zahl zur charakteristischen Sprungantworttiefe definiert werden.

In einer Ausführung hat sich gezeigt, dass die charakteristische Sprungantworttiefe etwa bei 2,5 liegt. Die Pfadlänge kann dann zweckmäßigerweise auf 3 festgelegt werden. Das bedeutet, dass die Pfadkosten nicht rekursiv, bis zum Bildrand, sondern nur für 3 Iterationen berechnet werden. Der Berechnungsaufwand kann dadurch signifikant reduziert werden.

In einer Ausführung erhöhen sich die nichtrekursiv berechneten Glattheitspfade von einem Pfadursprung hin zum Zielpixel der Kostenaggregation in ihrem Entwicklungsgrad schrittweise, wobei Pfadkosten eines jeweiligen Entwicklungsgrades sowohl für verschiedene Pfadrichtungen als auch für verschiedene Zielpixel modular und vielfach verwendet werden, insbesondere wobei Pfadkosten des ersten Entwicklungsgrades richtungsunabhängig vielfach, insbesondere für verschiedene Zielpixel, verwendet werden. Das bedeutet beispielsweise, dass für ein Pixel berechnete Pfadkosten eines Entwicklungsgrades zur Berechnung der Pfadkosten eines höheren Entwicklungsgrades eines anderen Pixels nochmals verwendet werden. Und/oder die Pfadkosten eines Pixels werden zur Kostenaggregation bei einem benachbarten Pixel nochmals verwendet. Der Vorteil besteht jedenfalls darin, dass die Anzahl an zu berechnenden Pfadkosten reduziert ist.

In einer Ausführung werden die zur Berechnung der Pfadkosten verwendeten lokalen Kostenfunktionen jeweils über mehrere Pixel gemittelt, wobei vorzugsweise jeweils über zwei entlang der Ausleserichtung benachbarte Pixel gemittelt wird. Der Vorteil besteht darin, dass die mehreren Pixel bei der Berechnung der Pfadkosten wie ein Pixel behandelt werden. Das bedeutet, dass die Pfadkosten für wenigstens die zwei Pixel nur einfach berechnet und gespeichert werden müssen.

In einer Ausführung laufen zur Kostenaggregation innerhalb eines in Ausleserichtung benachbarten Pixelpaares jeweils drei pixelpaarweise gemittelte und für verschiedene Glattheitspfade und Zielpixel mehrfach zu verwendende Glattheitspfade zweiten Entwicklungsgrades senkrecht von oben (z.B. in Ausleserichtung) und von unten (z.B. entgegen der Ausleserichtung) kommend auf das Pixelpaar zu, wobei die Kostenaggregation jedes Pixels dieses Pixelpaares sich aus seiner lokalen Kostenfunktion sowie aus den benannten sechs Pfadkostenfunktionen der zu diesem Pixel hinführenden Glattheitspfade zusammensetzt. Das bedeutet, dass in dieser Ausführung im wesentlichen sechs Glattheitspfade aus sechs Pfadrichtungen zur Kostenaggregation verwendet werden. Diese sechs Pfadrichtungen werden bis zu einem zweiten Entwicklungsgradberechnet, bevor sie der Kostenaggregation am Zielpixel zugeführt werden. Auf diese Weise sind sechs nichtrekursive Glattheitspfade bestimmt, die Tiefeninformation aus allen Bildrichtungen in annähernd gleicher Gewichtung in die Kostenaggregation einfließen lassen und darüber hinaus im Zielpixelpaar mehrfach verwendet werden.

In einer Ausführung werden bei Fortschreiten der Kostenaggregation entlang der Ausleserichtung von einem Pixelpaar zum nächsten Pixelpaar einmal berechnete Glattheitspfade in Gänze dreifach wiederverwendet, so dass sie stets, insbesondere bei bildzeilenweiser Auslesung von links oben nach rechts unten, jeweils zunächst als aus halbrechter Richtung, dann aus senkrechter Richtung und schließlich aus halblinker Richtung kommend auf das Pixel der Kostenaggregation zustreben. Hier wird die zueinander jeweils parallele und zur Kamera-Ausleserichtung senkrechte Pfadrichtung der vorgenannten Ausführung geeignet genutzt, um durch vielfaches Wiederverwenden bereits berechneter Pfadkosten deren Berechnungsressource vielfach zu entlasten.

Die Erfindung ist nachfolgend anhand von Ausführungsbeispielen mit Bezug auf die beiliegenden Zeichnungen näher erläutert.

Es zeigt:

Fig. 1: eine beispielhafte Vorrichtung zur Erzeugung von Tiefenbildern,

Fig. 2: eine schematische Darstellung zur Veranschaulichung des Blockmatching-Funktionsprinzips,

Fig. 3: eine schematische Darstellung naheliegender SGM-Pfadrichtungen i-ii-iii-iv gemäß dem Stand der Technik in einem Zielsystem mit minimaler Zwischenspeicherung von Bilddaten,

Fig. 4: eine schematische Darstellung einer um $-\pi/8$ rad gedrehten Pfadanordnung $\alpha$-$\beta$-$\gamma$-$\delta$,

Fig. 5: ein beispielhaftes Pfadmuster mit um -π/8 rad gedrehter Pfadanordnung zur Tiefenbildberechnung unter semiglobalen Glattheitsbedingungen,

Fig. 6: eine Gegenüberstellung von idealen (im Winkelhalbraum gleichverteilten) Pfadrichtungen bei -π/8 rad Drehung (links) zu realen (makroskopischen) Pfadrichtungen des Pfadmusters der Fig. 5 (rechts),

Fig. 7: eine Veranschaulichung des Begriffs der Richtungstreue der Kostenaggregation,

Fig. 8: eine Veranschaulichung von heller und dunkler Halbebene der Bildaufnahme und der Kamerachip-Ausleserichtung,

Fig. 9: eine Veranschaulichung der Kostenaggregation in Bildzeile i, unter Berücksichtigung von Pfadinformation sowohl aus Bildzeile i+1, als auch aus Bildzeile i-1,

Fig. 10: eine Konkretisierung der Kostenaggregation unter Berücksichtigung der Pfadinformationen der Zeilen i+1 und i-1 gemäß Fig. 9 für das Pfadmuster gemäß Fig. 5,

Fig. 11: eine schematische Darstellung einer Pfadkosten-Ringpuffer-Architektur für das Pfadmuster der Fig. 10,

Fig. 12: eine Veranschaulichung des Verhaltens der Pfadkosten L im Verlauf eines Disparitätssprungs entlang eines Pfades,

Fig. 13: eine Darstellung der Sprungantwort der Pfadkosten in Abhängigkeit einer Anzahl # Pixel nach einem Disparitätssprung,

Fig. 14: eine Veranschaulichung der Pfadverläufe sowie der Kostenaggregation gemäß einem Verfahren mit nichtrekursiver Berechnung von Glattheitspfaden,

Fig. 15: eine Darstellung der Rand- und Eckbetrachtung der Kostenaggregation bei einem Verfahren mit nichtrekursiver Berechnung von Glattheitspfaden,

Fig. 16: eine Darstellung des Ringpuffer-Speicherbedarfs für ein beispielhaftes Verfahren mit nichtrekursiver Berechnung von Glattheitspfaden, und

Fig. 17: eine Veranschaulichung der Kostenaggregation nach einem vereinfachten Verfahren mit nichtrekursiver Berechnung von Glattheitspfaden, das allein richtungsunabhängige Pfadkosten ersten Entwicklungsgrades nutzt.

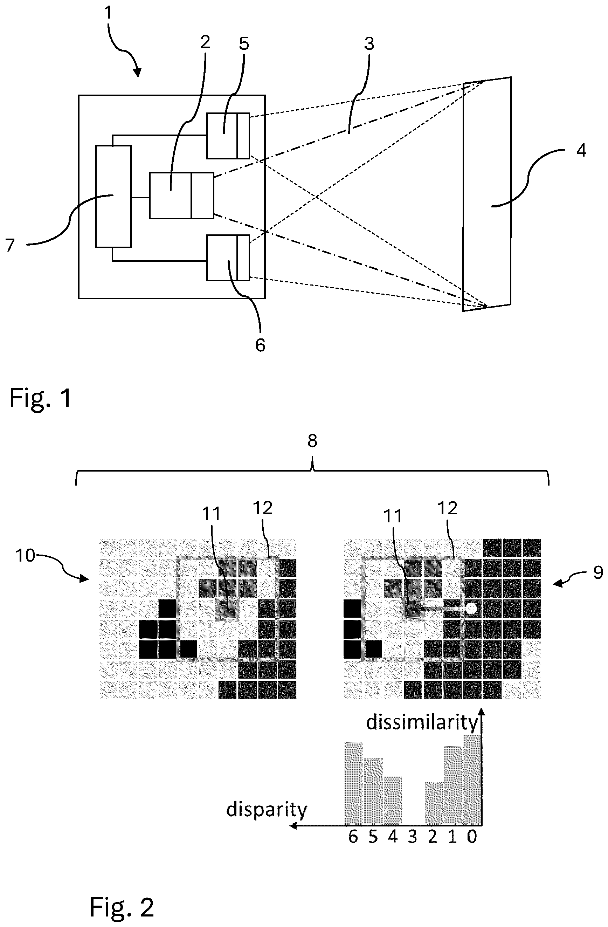

Die Fig. 1 zeigt beispielhaft eine Vorrichtung zur Erzeugung von Tiefenbildern, wie sie etwa für ein erfindungsgemäßes Verfahren verwendet werden kann. Die Vorrichtung 1 umfasst eine erste Kamera 5 mit einem ersten Bildsensor, oder KameraChip, und eine zweite Kamera 6 mit einem zweiten Bildsensor. Die beiden Kameras sind voneinander beabstandet angeordnet. Vorzugsweise sind die Kameras 5 und 6 dabei so ausgerichtet, dass ihre Bildsensoren in einer Ebene liegen und/oder dass sie den identischen Bildbereich 4 abdecken.

Die Vorrichtung 1 besitzt im Beispiel eine Beleuchtungsquelle 2 mit einem Lichtkegel 3, der den Bildbereich 4 ausleuchtet. Stattdessen oder zusätzlich kann auch eine oder mehrere Beleuchtungsquellen außerhalb der Vorrichtung eingesetzt werden oder nur das Umgebungslicht verwendet werden. Die Beleuchtungsquelle 2 kann auch ein strukturiertes Licht erzeugen, so dass auch auf kontrastschwachen Oberflächen eine Tiefenbildberechnung möglich ist.

Die Vorrichtung 1 besitzt im Beispiel eine Auswerteeinheit 7 zur Verarbeitung der Bildsignale der beiden Kameras 5 und 6 und zur Erzeugung der Tiefenbilder. Alle Komponenten der Vorrichtung 1 können dabei in einem Gerät integriert sein, oder auf mehrere Geräte verteilt sein.

Stereoskopie ist räumliches Sehen durch mehrere, in der Regel zwei Betrachtungsperspektiven. Die Kernaufgabe der maschinellen Stereoskopie liegt in der robusten Bestimmung von Korrespondenzen zwischen diesen Betrachtungsperspektiven.

Eine wesentliche Vereinfachung dieser Korrespondenzsuche ist möglich, wenn die genaue relative Lage der beiden Betrachtungsperspektiven zueinander sowie die intrinsischen Verzerrungen jeder einzelnen Betrachtungsperspektive (Abbildungsfehler) bekannt sind. Mit dieser Information lassen sich Stereobilder rektifizieren, wodurch sich die Korrespondenzsuche auf ein eindimensionales Suchproblem entlang sogenannter Epipolarlinien vereinfachen lässt. Diese Epipolarlinien entsprechen im rektifizierten Stereo-Bildpaar in aller Regel gleichen Bildzeilen, und die Korrespondenzsuche reduziert sich auf die Bestimmung der sogenannten Disparität - also des Pixelversatzes korrespondierender Bildpunkte entlang der Epipolarlinien oder Bildzeilen. Im Folgenden werden hier der Einfachheit halber eingehende Bilddaten stets als bereits rektifizierte Bilddaten betrachtet. Für das erfindungsgemäße Verfahren ist es vorteilhaft, wenn die Bilddaten rektifiziert sind.

Eine Methode der Disparitätsberechnung aus digitalen Stereobildpaaren ist das sogenannte Block Matching, bei dem üblicherweise quadratische Pixelblöcke entlang der Epipolarlinien zwischen den beiden Stereobildern mit dem Ziel der Minimierung eines Verschiedenheitsmaßes miteinander verglichen werden.

Die Fig. 2 veranschaulicht dieses Blockmatching-Funktionsprinzip anhand eines Stereobildpaares 8 mit Stereo-Grauwertbildern. Das hier gezeigte rechte Bild 9 weist gegenüber dem linken Bild 10 eine Verschiebung korrespondierender Bildinformation (Pfeil) in Gestalt einer sogenannten Disparität d (disparity) auf, die durch das Minimum einer Verschiedenheitsfunktion C (dissimilarity) auf ein interessierendes Pixel 11 umgebenden quadratischen Blöcken 12 (hier 5x5) entlang horizontal verlaufender sogenannter Epipolarlinien bestimmt wird. Bei bekannter Kameraanordnung gibt die Disparität Aufschluss über die Tiefe eines interessierenden Bildpunktes im Raum.

Man betrachte ein Pixel $\boldsymbol{p}$ beispielsweise des linken Bildes 10 eines rektifizierten Stereobildpaares 8. Block Matching sucht nun das Minimum einer Verschiedenheitsfunktion $C(\boldsymbol{p},d)$ eines das Pixel $\boldsymbol{p}$ umgebenden, etwa quadratischen Pixelblocks in Abhängigkeit von der Disparität d (Fig. 2 disparity). Die lokale Kostenfunktion oder Verschiedenheitsfunktion C beschreibt die Verschiedenheit (Fig. 2 dissimilarity) des genannten Pixelblocks zu einem entlang der Epipolarrichtung im rechten Bild 9 relativ zu dessen Pixel $\boldsymbol{p}$ um d Pixel verschobenen Pixelblocks. Voraussetzung ist hier, dass gleiche Bildpixel $\boldsymbol{p}$ in rektifiziertem linkem Bild 10 und rechtem Bild 9 auch jeweils auf gleicher Epipolarlinie liegen.

Hierbei sind im Stand der Technik diverse Verschiedenheitsmaße bekannt und gebräuchlich, wie z.B. die Abweichungsbetragssumme, die Abweichungsquadratsumme oder die Hamming-Distanz der CensusTransformation der Intensitäten der miteinander zu vergleichenden Pixelblöcke, oder auch entropieartige Verschiedenheitsmaße. Die Wahl eines geeigneten Verschiedenheitsmaßes hängt wesentlich von den vorhandenen Ressourcen eines Zielsystems, sowie von den Genauigkeitsanforderungen einer Zielapplikation ab.

Beim Block Matching bildet diejenige Disparität $d$ mit jeweils minimaler Verschiedenheitsfunktion $C(\boldsymbol{p},d)$ das Ergebnis der Disparitätsberechnung zum Pixel $\boldsymbol{p}$. Zu schwache Strukturierung (d.h. Auszeichnung korrespondierender Bildpunkte) in Kombination mit optischen Artefakten (etwa Spiegelreflexionen, Laser-Speckling, etc.), lokalen Rektifizierungsfehlern, Abschattungen, Verdeckungen, Verzerrungen oder Bildrauschen können das Disparitätsbild gemäß Block Matching derart stören, dass vergleichsweise große Blockgrößen für robuste Ergebnisse notwendig sind. Große Matchingblöcke sind aber andererseits nur für Disparitätskarten mit vergleichsweise niedrigen charakteristischen Ortsfrequenzen geeignet und erfordern einen hohen Berechnungsaufwand, der ungefähr quadratisch mit der Blockabmessung skaliert.

Eine maßgebliche Qualitätsverbesserung des Block-Matching mit relativ kleinen Blöcken von typischerweise 3x3 oder 5x5 Pixeln bringt die Aufprägung semiglobaler Glattheitsbedingungen (siehe oben, SGM). Derartige Glattheitsbedingungen sanktionieren Disparitätssprünge zu benachbarten Pixeln bei der Berechnung des Verschiedenheitsmaßes, das heißt sie bewerten das Verschiedenheitsmaß der Disparität eines Bildpunktes künstlich höher, sobald diese Disparität von der Disparität der benachbarten Bildpunkte entlang definierter eindimensionaler Pfade abweicht. Diese Forderung nach einer lokalen Korrelation der Disparität ist intuitiv - korrelieren doch die allermeisten Bildpunkte einer Disparitätskarte stark mit ihren jeweils nächsten Nachbarn.

Die Auswahl geeigneter Sanktionen (Penalties) P ist nun entscheidend zur Bestimmung genauer Disparitätsbilder. Im Stand der Technik ist hier ein zweistufiger Sanktionsmechanismus bekannt, der Disparitätssprünge entlang eines Pfades mit einer Disparitätsänderung $|\Delta d|=1$ mit einer Sanktion $P_1$ und Disparitätssprünge mit einer Disparitätsänderung $|\Delta d|>1$ mit einer Sanktion $P_2>P_1$ im Verschiedenheitsmaß belegt, während gleiche Disparitäten entlang eines Pfades nicht sanktioniert werden.

Das aggregierte Verschiedenheitsmaß am Pixel $\boldsymbol{p}$ setzt sich demnach aus der Summe einer definierten Anzahl an jeweils zu durch $\boldsymbol{p}$ laufenden Pfaden $\boldsymbol{r}$ spezifischen Verschiedenheitsmaßen oder sogenannten Pfadkosten $L_r(\boldsymbol{p},d)$ zusammen, die sich jeweils rekursiv berechnen zu

$$L_r(\boldsymbol{p},d) = C(\boldsymbol{p},d) + \min\left(L_r(\boldsymbol{p}-\boldsymbol{r},d), L_r(\boldsymbol{p}-\boldsymbol{r},d\pm 1) + P_1, \min_i L_r(\boldsymbol{p}-\boldsymbol{r},i) + P_2\right)$$
$$- \min_k L_r(\boldsymbol{p}-\boldsymbol{r},k).$$

Hier hält durch Verwendung der Pfadkosten $L_r(\boldsymbol{p}\text{-}r,d)$ des jeweils nächsten Nachbarpixels entlang des Pfades $\boldsymbol{r}$ ein rekursives Element Einzug. Aus obiger Gleichung ersichtlich müssen die Pfadkosten eines Disparitätssprungs zum Pixel $\boldsymbol{p}$ hin bei Disparitätssprüngen $|\Delta d|=1$ mindestens um die Sanktion $P_1$ und bei Sprüngen $|\Delta d|>1$ mindestens um die Sanktion $P_2$ günstiger sein als die Pfadkosten unveränderter Disparität zum nächsten Pfadnachbarn, damit sich ein Disparitätssprung durchsetzen kann. Dieser Zwang zu lokal gleicher oder ähnlicher Disparität bewirkt eine erhebliche Glättung der Disparitätsbilder schon bei den kleinstmöglichen Blockgrößen von 3x3 oder 5x5 Pixeln. Der hier erhöhte Speicher- und Berechnungsaufwand der Pfadkosten $L_r(\boldsymbol{p},d)$ wird dadurch zu einem erheblichen Teil kompensiert durch einen wesentlich kleineren Aufwand des Block Matching aufgrund sehr kleiner Blöcke. Der letzte Term in obiger Pfadkosten-Definitionsgleichung dient allein der Größenbegrenzung von $L_r(\boldsymbol{p},d) \leq C_{max}+P_2$ zwecks effizienter Datentypzuweisung.

Das Disparitätsbild resultiert beim SGM aus dem Disparitätsminimum der aggregierten Kostenfunktion

$$S(\boldsymbol{p},d) = \sum_r L_r(\boldsymbol{p},d)$$

Durch die rekursive Berücksichtigung der Pfadkosten von jeweils benachbarten Pixeln ist der Berechnungsaufwand jedoch sehr hoch. Die Erfindung beschreibt verschiedene Maßnahmen, durch die der Rechenaufwand reduziert werden kann. Diese Maßnahmen können dabei einzeln oder in Kombination verwendet werden.

Es ist im Stand der Technik üblich für die bei Tiefenbildberechnungen üblicherweise hohe Zahl an einfachen Rechenoperationen eine programmierbare Logik-Gatter-Anordnung oder FPGA (Field Programmable Gate Array) zu verwenden, deren Parallelisierungsgrad frei skalierbar ist. Dadurch können zwar unvergleichlich hohe Berechnungsgeschwindigkeiten erreicht werden, durch den rekursiven Charakter des im Stand der Technik beschriebenen Berechnungsverfahrens sind der Parallelisierung jedoch Grenzen gesetzt, denn ein Berechnungsschritt, der rekursiv auf dem Ergebnis eines vorangegangenen Berechnungsschrittes aufbaut, kann erst ausgeführt werden, wenn das Ergebnis des vorangegangenen Berechnungsschrittes vorliegt. Der Kern der vorliegenden Erfindung löst den entscheidenden Flaschenhals bei der Parallelisierung eines rekursiven SGM-Tiefenbildalgorithmus durch eine geeignete Wahl der Pfadgeometrie auf. Letztere Wahl nutzt die Ausleserichtung der Kamerachips als Orientierung, um ohne Informationsverlust Pfadrichtungen entlang der Ausleserichtung vermeiden zu können, welche eine sehr schnelle rekursive Berechnung erfordern.

Es liegt zunächst nahe, die Pfadgeometrie des SGM jeweils geradlinig aus über den Winkelraum gleichverteilten Bildrichtungen auf ein Pixel $\boldsymbol{p}$ zulaufen zu lassen. Im Stand der Technik sind hier beispielsweise 16 Pfadrichtungen vorgeschlagen, wobei diese Anzahl für schlanke und speicherarme Embedded-Zielsysteme unrealistisch hoch ist.

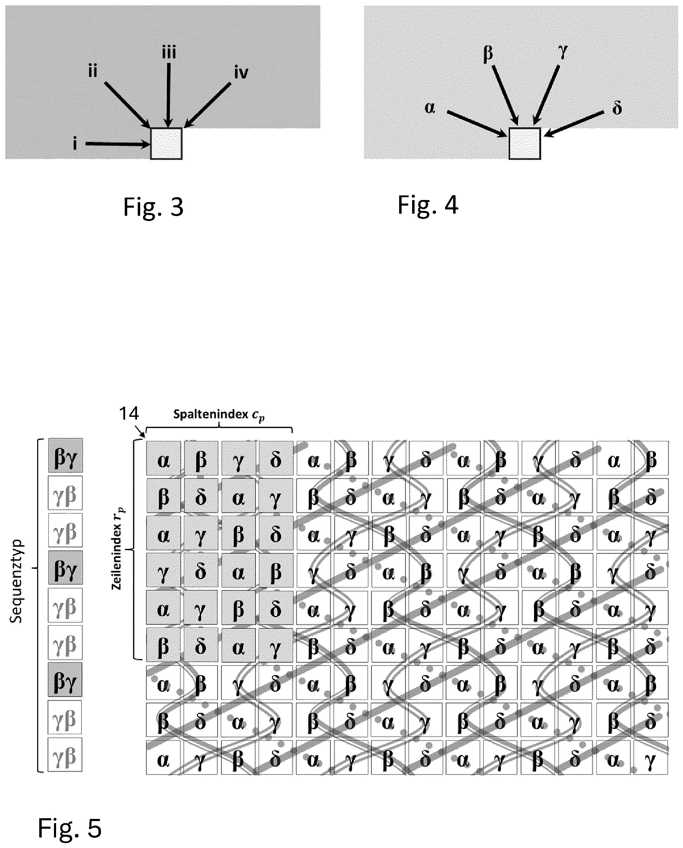

In einer Ausführung wird daher vorgeschlagen, lediglich vier innerhalb einer Halbebene im Winkelraum gleichverteilte Pfadrichtungen zu verwenden. Dadurch kann eine Anforderung, möglichst geringe Bildanteile vor der Tiefenbildberechnung zwischenzuspeichern erfüllt werden. Hierbei liegt es zunächst nahe, bei Auslesen eines Kamerachips in Leserichtung von links oben nach rechts unten, diese vier Pfadrichtungen den Bildrichtungen aus i) West, ii) Nordwest, iii) Nord, und iv) Nordost kommend auszurichten. Die Fig. 3 zeigt schematisch diese vier naheliegenden SGM-Pfadrichtungen i-ii-iii-iv in einem Zielsystem mit minimaler Zwischenspeicherung von Bilddaten. Pfad i verläuft dabei entlang der Kamerachip-Ausleserichtung.

Die nächsten Nachbarn entlang der Pfade $r$ lägen in diesem Schema dann jeweils i) links, ii) links oberhalb, iii) oberhalb bzw. iv) rechts oberhalb eines interessierenden Pixels $\boldsymbol{p}$. Ein Problem ergibt sich beim Auslesen von links nach rechts nun im Pfad i), dessen Pfadkostenberechnung aufgrund der Rekursion innerhalb der Auslesezeit eines einzigen Pixels zu erfolgen hat. Ein Kamerachip mit z.B. 60 MHz würde einer mit 480 MHz getakteten Tiefenbildberechnungseinrichtung nur 8 Takte pro Bildpixel zur Verfügung stellen, um Pfadkosten $L$, entlang der Ausleserichtung rekursiv berechnen zu können. Wenn aber eine nicht weiter parallelisierbare, weil wiederum aufeinander aufbauend gestaffelte Operation wie die Minimumbestimmung eines Arrays mit $2^7$ Elementen (typische Disparitätsdomäne) allein schon 7 Takte davon verbraucht, so ist eine vollständige Pfadkostenberechnung innerhalb von 8 Takten in der Praxis nur schwer umsetzbar.

Eine Ausführung der Erfindung orientiert die Pfadgeometrie daher geeignet an der Ausleserichtung der Kamerachips, um der Notwendigkeit der Pfadkostenberechnung unter derart harten zeitlichen Bedingungen ohne Informationsverlust entkommen zu können. Die hier beschriebene Ausführung ermöglicht dies durch Drehung der Pfadrichtungen in einer Weise, so dass keine Pfadkostenberechnung auf Nachbarinformation aus der aktuell auszulesenden Bildzeile zurückgreift.

Die Fig. 4 zeigt eine gemäß der Ausführung nach Fig. 3 um -π/8 rad gedrehte Pfadanordnung α-β-γ-δ, bei der die Geschwindigkeitsanforderung bei der Pfadkostenberechnung wesentlich entspannt ist, da die Rekursion dann nur noch auf Pfadkosten der darüberliegenden Bildzeile zurückgreift, deren Berechnung dann nicht mehr derart schnell erfolgen muss.

Eine Drehung der Pfadrichtungen um ungefähr einen Winkel -π/8 rad (-22.5°) in der Bildebene ermöglicht, dass alle Pfade ihre nächsten Pfadnachbarn in der Vorgängerbildzeile haben (siehe Fig. 4). Damit reicht die Pfadkostenberechnung der nächsten Pfadnachbarn typischerweise zeitlich um 2-3 Größenordnungen länger zurück als diejenige des nächsten Nachbarn entlang der Ausleserichtung. Gleichzeitig bleiben die Pfadrichtungen nahezu gleichverteilt über die helle Halbebene der Bildaufnahme, was den verlustfreien Charakter dieser Ausführung gegenüber der in Fig. 3 gezeigten Ausführung begründet.

Ein zentraler Aspekt der vorliegenden Erfindung betrifft die Einsparung von Berechnungs- und Speicherressourcen mittels Subsampling.

Der ursprüngliche Ansatz des Semiglobal Matching, SGM, berechnet in jedem Pixel $p$ zu jeder Pfadrichtung $r$ Pfadkosten $L_r$. Die Erfindung hat nun erkannt, dass dieser weitaus aufwändigste Berechnungsschritt des SGM damit in einer Dichte ausgeführt wird, in der Pfadinformation zumeist hochredundant berechnet wird. Hier liegt das wohl größte Einsparpotential an Berechnungsschritten und Speichereinheiten pro Genauigkeitsverlust, und so begründet das erfindungsgemäße Verfahren einen Subsampling-Ansatz, der Berechnungsaufwand sowie Speicherbedarf maßgeblich und ohne messbare Kompromisse bei der Genauigkeit reduziert.

Erfindungsgemäß werden N Pfade für ein k-Tupel an entlang der Ausleserichtung aufeinanderfolgenden Pixeln jeweils nur einmal berechnet. Das bedeutet, dass N Pfade auf k Pixel verteilt werden.

Bei einer Gesamtpfadzahl von N=4 und k=4 reduziert sich damit der gesamte Tiefenbild-Berechnungsaufwand fast um einen Faktor 4.

Wurden bisher die Pfadkosten in jedem Bildpixel und zu jeder Pfadrichtung neu berechnet, so wird jetzt für N Pixel die Pfadkostenberechnung eines nächstliegenden Pfades definierter Richtung nur ein einziges Mal ausgeführt. Der damit einhergehende Informations- und Auflösungsverlust ist praktisch vernachlässigbar. Dies liegt einerseits daran, dass gleiche Pfadrichtungen benachbarter Pixel in den meisten Fällen zueinander redundante Pfadinformation tragen. In den seltenen Fällen von Tiefenbildern mit höchstmöglichen Ortsfrequenzen im Bereich der inversen Pixelabmessung wären darüber hinaus Tiefensprünge ohnehin aufgrund einer lokalen verzerrungsbedingten Stresswirkung auf den Tiefenbildalgorithmus von lokalen Fehlern überlagert, die eine genaue Auflösung solch hochfrequenter Tiefensprünge zerstörten.

Wenn ein jedes Pixel nur Information zu einem einzigen Richtungspfad enthält, so muss einerseits eine glatte Pfadpropagation über die Bildfläche hinweg gewährleistet sein, mit der jedem Pixel genau eine Pfadrichtung zugeordnet ist. Andererseits muss eine richtungsnächste Zuordnung getroffen werden, die festlegt, welche Pixel Pfadinformation aus welchen Pfaden erben.

Zweckmäßigerweise wird die Anzahl der Pfadrichtungen N=4 gewählt. Mit vier Pfaden in der *hellen* Halbebene der Bildaufnahme wird in einer Ausführung jedem Pixel $p$ nun nur noch genau ein Pfad $r$ zugeordnet, dessen Pfadkosten $L_r$ zu diesem Pixel berechnet und gespeichert werden. Die aggregierten Kosten $S(p,d)$ speisen sich dann jeweils aus lokalen Matching-Kosten $C(p,d)$ sowie aus den Pfadkosten der sogenannten *richtungsnächsten* Pfadnachbarn, also der Pixel innerhalb des k-Tupels.

Dieses Subsampling kann sowohl alleine als Maßnahme zur Reduzierung des Rechenaufwands verwendet werden. Es kann jedoch auch mit der oben beschriebenen Drehung der Pfadrichtungen eingesetzt werden, um die Anforderungen an die Rechengeschwindigkeit weiter zu senken.

Sowohl die Pfadpropagation über die Bildfläche als auch die genaue Ausprägung der Zuweisung *richtungsnächster* Pfadnachbarn soll hier beispielhaft gemäß einer solchen kombinierten Ausführung konkretisiert werden: Die vier Pfade in $-\pi/8$ rad rotierter Pfadgeometrie seien hier mit dem Pfadindex $\kappa$ bezeichnet, der jeweils die Werte $\alpha$, $\beta$, $\gamma$ oder $\delta$ annehmen kann. Mit einer Indizierung rektifizierter Bildpixel nach Zugehörigkeit zu Bildzeile i (von oben gezählt) und Bildspalte j (von links gezählt) können die lokalen Pfadkosten im Pixel $p=\{i,j\}$ dann als

$$L_{i,j,\kappa}(d) = C_{i,j}(d) + \min\left\{L_{i-1,j+\varepsilon,\kappa}(d),\ P_1 + L_{i-1,j+\varepsilon,\kappa}(d \pm 1),\ P_2 + \min_m\{L_{i-1,j+\varepsilon,\kappa}(m)\}\right\}$$
$$- \min_n\{L_{i-1,j+\varepsilon,\kappa}(n)\}$$

berechnet werden. Für die Pfadpropagation relevant ist hier der Spaltendifferenzindex $\varepsilon$, der die Pfadtrajektorie über die Bildfläche wesentlich bestimmt. Hier soll mit einem Zeilenindex $r_p = i\%6$ beispielhaft folgende Ausführung des erfindungsgemäßen Verfahrens gezeigt werden:

| $K$ | $\varepsilon$ |
|---|---|
| $\alpha$ | $\varepsilon = -2$ |
| $\beta$ | $r_p = \{0,1,2,3,4,5\} \mapsto \varepsilon = \{-1,1, -2, -1,1, -2\}$ |
| $\gamma$ | $r_p = \{0,1,2,3,4,5\} \mapsto \varepsilon = \{1, -1,2,1, -1,2\}$ |
| $\delta$ | $\varepsilon = 2$ |

Die Pfadzugehörigkeit aller Pixel **p**=$\{i,j\}$ wird mit einem Spaltenindex $c_p$=$j$%4 folgendermaßen definiert:

| $r_p$ | $K$ |
|---|---|
| 0 | $c_p = \{0,1,2,3\} \mapsto \kappa = \{\alpha,\beta,\gamma,\delta\}$ |
| 1 | $c_p = \{0,1,2,3\} \mapsto \kappa = \{\beta,\delta,\alpha,\gamma\}$ |
| 2 | $c_p = \{0,1,2,3\} \mapsto \kappa = \{\alpha,\gamma,\beta,\delta\}$ |
| 3 | $c_p = \{0,1,2,3\} \mapsto \kappa = \{\gamma,\delta,\alpha,\beta\}$ |
| 4 | $c_p = \{0,1,2,3\} \mapsto \kappa = \{\alpha,\gamma,\beta,\delta\}$ |
| 5 | $c_p = \{0,1,2,3\} \mapsto \kappa = \{\beta,\delta,\alpha,\gamma\}$ |

Die hier definierte Vorschrift zur Pfadpropagation und zur Zuweisung von Pfaden zu Bildpixeln führt direkt zu dem in Fig. 5 veranschaulichten Pfadmuster. Dieses Pfadmuster ist gekennzeichnet durch eine sich periodisch über die Bildfläche fortsetzende Einheitszelle 14 mit einer Abmessung von 6x4 Pixeln, wie sie bereits aus obiger $r_p$-$c_p$-$\kappa$ Zuweisungstabelle ersichtlich ist. Man kann dieses Pfadmuster auch als Aneinanderreihung der jeweils zeilenweise um zwei Pixel versetzten Sequenzen αβγδ (βγ-Sequenz) oder αγβδ (γβ-Sequenz) betrachten, wobei in erster Zeile mit einer βγ-Sequenz startend die sechs Zeilen der Einheitszelle 14 durch die jeweils um zwei Pixel horizontal zueinander versetzte vertikale Sequenzfolge βγ-γβ-γβ-βγ-γβ-γβ das Pfadmuster erschöpfend beschreibt. Dies ist ebenfalls in Fig. 5 veranschaulicht.

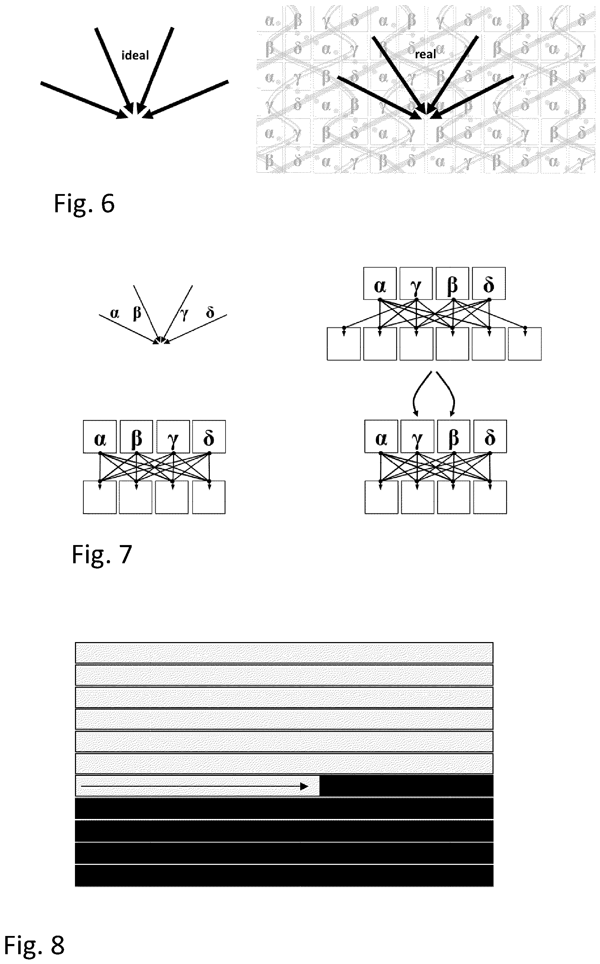

Bei Betrachtung des Pfadmusters in Fig. 5 fällt auf, dass die Pfade β und γ nicht geradlinig verlaufen. Dies ist zwangsläufig eine Folge des Subsampling: Wenn für jedes Pixel Pfadkosten für genau eine Pfadrichtung berechnet und gespeichert werden, dann müssen sich die Pfade zum Teil gegenseitig ausweichen. Dies führt zu lokalen Unterschieden zwischen mikroskopischen und makroskopischen Pfadrichtungen, so dass z.B. ein Pfad γ durchaus lokal von oben links nach unten rechts vererben kann, obwohl er makroskopisch eher von oben rechts nach unten links verläuft. Diese lokalen Anomalien in der Vererbungsrichtung haben sich allerdings in Simulation und Praxis als nicht nachteilig erwiesen, da das relevante Tiefengedächtnis eines jeweiligen Pfades in der Regel weiter als bis zum nächsten Nachbarn zurückreicht. Ferner fällt auf, dass die makroskopischen Pfadrichtungen α, β, γ und δ nicht genau den um -π/8 rad gedrehten Pfadrichtungen i, ii, iii, und iv entsprechen, wie auch in Fig. 6 dargestellt. Die Pfade α und δ verlaufen jeweils geringfügig steiler als gemäß -π/8 rad Drehung, während die Pfade β und γ jeweils etwas flacher als gemäß -π/8 rad Drehung verlaufen. Dadurch entsteht eine leichte Pfadkonzentration auf den π/4 rad (45°) Winkelhalbierenden zu den Hauptachsen des Bildes im Kontrast zu den horizontalen und vertikalen Hauptachsen des Bildes selbst. Der damit verbundene Informationsverlust kann jedoch als vernachlässigbar betrachtet werden.

An den Bildrändern eines rektifizierten Stereobildes mit M Spalten existieren zu i-1<0 und zu 0>$j+\varepsilon$ sowie $j+\varepsilon\geq M$ keine $L_{i-1,j+\varepsilon,\kappa}$. In diesem Fall soll stets $L_{i,j,\kappa} = C_{i,j}$ gelten.

Da im erfindungsgemäßen Verfahren nicht jede Pfadrichtung in jedem Bildpixel gespeichert ist bedarf es einer Zuordnung sogenannter *richtungsnächster* Pfadnachbarn bei der Summation der aggregierten Kosten $S_{i,j}$. Der Begriff der Richtungstreue bei der Kostenaggregation ist in Fig. 7 für die beiden möglichen Pfadsequenztypen αβγδ und αγβδ veranschaulicht. Demnach sollten α-Pfade ihre Pfadkosten stark nach rechts vererben, β-Pfade sollten ihre Pfadkosten schwach nach rechts vererben, γ-Pfade sollten ihre Pfadkosten schwach nach links vererben, und δ-Pfade sollten ihre Pfadkosten stark nach links vererben. Das in Fig. 7 gezeigte Pfad-Vererbungsschema bei der Kostenaggregation zeigt für Bildzeilen des αβγδ Pfadsequenztyps klar in sich abgeschlossene vierteilige Vererbungsblöcke. Für Bildzeilen des αγβδ Sequenztyps werden die Vererbungsblöcke aufgrund der Vertauschung von β und γ Pixeln unvorteilhaft aufgebrochen. Hier bietet sich für eine einfache Implementierung eine Abschwächung der Richtungstreue an, die β und γ Vererbungsrichtungen in einer Weise staucht, dass auch hier in sich abgeschlossene vierteilige Vererbungsblöcke entstehen.

Zur Zwischenspeicherung der Pfadkostenfunktionen können nun zwei Pfadkostenpuffer $P_j|_s$ mit einer Größe von jeweils ($M$//4+2)·4·$DR$·$CD$ Bit mit ($M$//4+2)·4 ausgewiesenen Startadressen j für jeweils eine Pfadkostenfunktion angelegt werden, wobei M die Bildspaltenzahl, DR die Disparitätsdomänenbreite und *CD* die Bittiefe der Kostenfunktion bezeichnet. Der Paritätsindex *s=i%2* unterscheidet die beiden Pfadkostenpuffer nach geraden (s=0) vs. ungeraden (s=1) Bildzeilen. Beim Durchlauf zur Berechnung des Tiefenbildes in Kamerachip-Ausleserichtung wird zunächst der Pfadkostenpuffer gemäß Parität der Zeile i beschrieben:

$$P_j\Big|_{s=i\%2} = \min\left\{L_{i,j,\kappa}(d),\ P_1 + L_{i,j,\kappa}(d \pm 1),\ P_2 + \min_m\{L_{i,j,\kappa}(m)\}\right\} - \min_n\{L_{i,j,\kappa}(n)\}$$

Die Kostenaggregation erfolgt nun (sofern es sich nicht um die erste Bildzeile i=0 handelt, dann $S_{i,j}=C_{i,j}$) mit dem Pfadkostenpuffer der jeweiligen Vorgängerzeile zu

$$S_{i,j} = \#_P \cdot C_{i,j} + \sum_{m=g_{i,j}}^{g_{i,j}+3} P_m|_{s=\delta_i}$$

mit einem Index

$$g_{i,j} = \big((j + 2\delta_i)//4\big) \cdot 4 - 2\delta_i$$

und mit $\delta_i = (i+1)\%2$. Die ganze Zahl $1 \leq \#_P \leq 4$ soll - außer in der ersten Bildzeile - der Anzahl der gültigen Pfadkosteneinträge $P_m|_s$ im obigen Summenterm entsprechen: So beträgt $\#_P=2$ jeweils für die ersten beiden Spalten in ungeraden Zeilen, und $\#_P=(M-2\delta_i)\%4$ für die letzten $(M-2\delta_i)\%4\neq0$ Spalten jeder Zeile, $\#_P=1$ in der gesamten ersten Zeile ($i=0$, keine Vorgängerzeile vorhanden), und $\#_P=4$ in allen anderen Pixeln. Diese Vorschrift gewährleistet, dass in der Kostenaggregation jedem Kostenpfad (sofern vorhanden) genau eine lokale Verschiedenheitsfunktion $C_{i,j}$ gegenübergestellt ist, wie im Stand der Technik bekannt.

Mit dieser Vererbungsvorschrift ist eine Kostenaggregation in jeweils abgeschlossenen vierteiligen Blöcken inkl. Randbetrachtungen vollständig beschrieben, und die lokale Disparität $d_{i,j}$ resultiert aus dem Minimum der aggregierten Kostenfunktion $S_{i,j}(d)$.

Der hier genannte Subsampling-Ansatz reduziert den Energieverbrauch der Tiefenbildberechnung auf einen Bruchteil und schafft substanziellen Raum für Beschleunigung und Miniaturisierung ohne messbaren Informationsverlust.

Für Tiefenbildberechnungen auf schlanken und speicherarmen Embedded-Zielsystemen mit gleichzeitig hohen Geschwindigkeitsanforderungen ist es sinnvoll, die Tiefenbildberechnung der Bildaufnahme möglichst dicht nachzulagern, um die Anforderungen an eine Zwischenspeicherung von Bilddaten zu minimieren. Dies birgt aber Einschränkungen mit Blick auf den rekursiven Charakter der Pfadberechnung.

Denn eine rekursive Pfadberechnung aus noch nicht aufgenommenen (dunklen) Bildbereichen ist unmöglich. So sind in einer speicherarmen SGM-Implementierung mit Bildaufnahme in Leserichtung von oben links nach unten rechts die möglichen Pfadrichtungen auf die Halbebene beschränkt, in der Bildinformation bereits zur Verfügung steht. Aus der dunklen Halbebene des Bildes können einem interessierenden Pixel keine Glattheitsbedingungen auferlegt werden.

Die Fig. 8 zeigt eine Veranschaulichung von heller und dunkler Halbebene der Bildaufnahme inkl. Kamerachip-Ausleserichtung. Zum Zeitpunkt der Bildaufnahme ist stets nur Bildinformation aus der hellen Halbebene verfügbar, weshalb eine rekursive Propagation von Pfadinformation aus der dunklen Halbebene (schwarze Zeilen), in der Bildinformation erst in der Zukunft verfügbar sein wird, nicht möglich ist.

Dies wird durch den rekursiven Charakter der Pfadberechnung verhindert, und dies führt auch zu einem messbaren Genauigkeitsverlust des Tiefenbildalgorithmus.

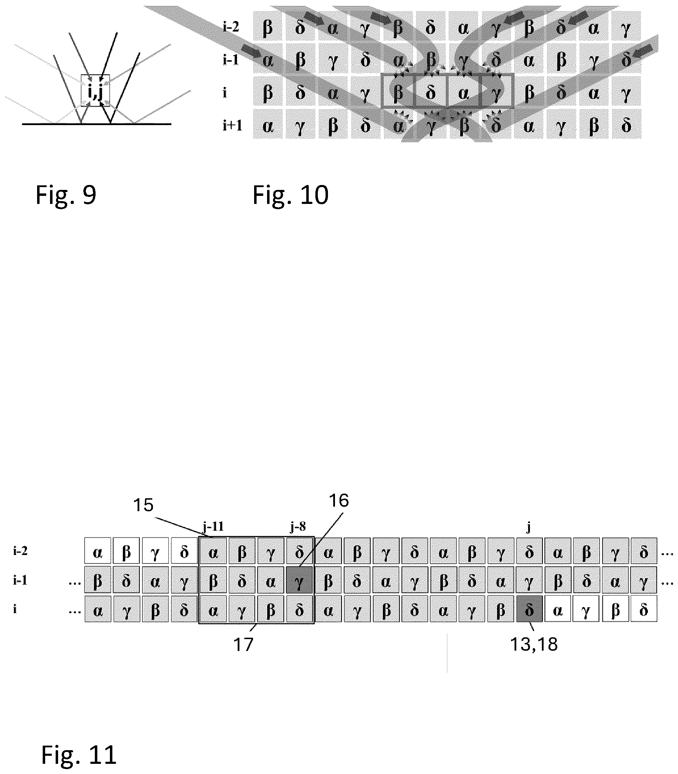

Gegenstand einer Ausführung ist daher ein Ansatz, bei der speicherarmen Tiefenbildberechnung (möglichst nahe an der Bildaufnahme) Glattheitsinformation aus den Eigenschaften allein der nächsten Pixelnachbarn in Richtung der dunklen (also noch informationsfreien) Halbebene einzubeziehen. Dazu wird der letzte Schritt der Tiefenbildberechnung - die Kostenaggregation - um eine Bildzeile relativ zur jeweils aktuellen Pfadkostenberechnung zurückversetzt, um auch Glattheitsbedingungen aus Richtungen der dunklen Halbebene aufzuprägen. Hierbei erfolgt die Rekursion über eine Spiegelung bestehender und bereits berechneter Pfadrichtungen an der Grenze zwischen heller und dunkler Halbebene, wie in Fig. 9 dargestellt. Diese Vorgehensweise birgt den entscheidenden Vorteil, dass sie einem speicherarmen SGM-Algorithmus Glattheitsbedingungen aus allen Bildrichtungen aufzuprägen vermag, während sich der wesentliche Aufwand der Pfadkostenberechnung aufgrund der gespiegelten Verwendung bereits berechneter Pfadkosten überhaupt nicht erhöht.

Diese Ausführung umfasst daher einen Ansatz, bei der Tiefenbildberechnung unter semiglobalen Glattheitsbedingungen Glattheitsinformation aus den Eigenschaften der unmittelbaren Bildumgebung in Richtung einer dunklen (also noch informationsfreien) Halbebene einzubeziehen. Die Beschränkung rekursiver Pfadkostenberechnung auf Bildaufnahme in der Vergangenheit wird hierbei beispielsweise durch eine Rückversetzung der Tiefenbildberechnung eine Zeile hinter die Zeile der aktuellen Pfadkostenberechnung in Kombination mit einer Pfadspiegelung an der Grenze zwischen heller und dunkler Halbebene der Bildaufnahme umgangen.

In Fig. 10 ist die Kostenaggregation $S_{i,j}$ nach derartiger pseudo 360° Rekursion visualisiert. Dies verdeutlicht auch, dass keine zusätzliche Berechnung von Pfadkosten für diesen Ansatz notwendig ist. Pfadkosten werden hier in genau gleicher Weise wie im bisherigen Ansatz berechnet, und allein die Art der Aggregation der Gesamtkosten ändert sich.

Unter oben genannten Bedingungen bietet sich eine geeignete Implementierung des erfindungsgemäßen Verfahrens über einen Pfadkosten-Ringpuffer $P_\alpha$ an (mit Startadressen-Positionsindex $\alpha$). Dieser Ringpuffer soll $2 \cdot M$ +12 Startadressen für jeweils $DR \cdot CD$ Bit Wörter enthalten (mit der Tiefenbild-Spaltenzahl M, der Disparitätsdomänenbreite DR, und der Bittiefe der Kostenfunktion $CD$). Der Pfadkosten-Ringpuffer läuft der Bildaufnahme nach, so dass an seinem Kopf jeweils die Pfadkosten des jüngst einem rektifizierten Stereobildpaar zugefügten Bildpixels geschrieben werden können. Diese Pfadkosten verbleiben aufgrund der Ringpuffer-Architektur für die Dauer des Durchlaufs von $2 \cdot M$ +12 Pixeln im Ringpuffer. Danach werden sie durch Pfadkosten eines weiter unten im Tiefenbild liegenden Pixels überschrieben.

Die Kostenaggregation $S_{i,j}$ findet dann stets dem Pufferkopf nachgelagert um M+8 Pixel statt, wie in Fig. 11 veranschaulicht. In der Fig. 11 ist gesondert eingezeichnet das Ringpufferende 15, also das jeweils letzte Pixel, das im Ringpuffer gespeichert ist, das aktuelle Pixel 16, für das die Kostenaggregation durchgeführt wird, der Block 17, aus dessen jeweils oberen und unteren vier Pixeln sich die Pfadkosten der Kostenaggregation speisen, und der Ringpufferstart 18, der durch das Pixel definiert ist, für das aktuell die rekursive Pfadkostenberechnung durchgeführt wird.

Zunächst soll hier der Zusammenhang zwischen Bildpixel-Indizierung und Ringpuffer-Adress-Indizierung definiert werden. Dabei wird zwischen Pfadkostenberechnung, also Rekursion R, und Kostenaggregation A unterschieden. Mit Rekursionszeilenindex $i_R$ und Spaltenindex $j_R$ ist ein für ein gesamtes Tiefenbild eindeutiger Rekursionspixelindex $a_R = i_R \cdot M + j_R$ und ein Aggregationspixelindex $a_A = a_R - (M+8)$ definiert (durchlaufend nach Kamerachip-Ausleserichtung von oben links nach unten rechts). Diese Bildpixel-Indizierung sei über die Vorschriften $\alpha_R = a_R \% (2 \cdot M + 12)$ und $\alpha_A = a_A \% (2 \cdot M + 12)$ mit den Adressindizes des Pfadkosten-Ringpuffers für Rekursion $\alpha_R$ und für Aggregation $\alpha_A$ verknüpft. Dann ist mit einem Bildspaltenindex

$$b_A = \left( (j_A + 2 \cdot (i_A + 1)\%2)//4 \right) \cdot 4 - 2 \cdot (i_A + 1)\%2$$

und einem Ringpuffer-Adressindex

$$\gamma_A = \alpha_A + (b_A - j_A)$$

der den Bildspaltenindex $b_A$ in den Ringpuffer-Adressindexraum transformiert die aggregierte Kostenfunktion gegeben als

$$S_{i_A, j_A} = \#_P \cdot C_{i_A, j_A} + \sum_{m = \gamma_A - M}^{\gamma_A - M + 3} P_m + \sum_{m = \gamma_A + M}^{\gamma_A + M + 3} P_m$$

wobei Adressindices $m<0$ und $m \geq 2M+12$ gemäß Ringpuffer-Architektur stets auf $m\%(2M+12)$ abzubilden sind.

Folgende Randbetrachtungen sind hier relevant: Für $b_A<0$ wird nur jeweils ab $m=\gamma_A \pm M+2$ bis $m=\gamma_A \pm M+3$ summiert. Für $b_A+3>M$ wird nur von $m=\gamma_A \pm M$ bis $m=\gamma_A \pm M+M-b_A$ summiert. In der ersten Zeile fällt der erste Summenterm weg (keine Zeile darüber vorhanden), und in der letzten Zeile fällt der zweite Summenterm weg (keine Zeile darunter vorhanden). Die lokalen Gewichte $\#_P$ wiegen wie bisher stets genau die Anzahl der Summenelemente der Pfadkosten auf (jetzt $\#_P \leq 8$). Kostenaggregation kann pro Tiefenbildberechnung erst starten, wenn Rekursion bereits bis Pixel $a_R = M+8$ fortgeschritten ist, und dafür schreitet sie nach vollständiger Pfadrekursion über das gesamte Tiefenbild um weitere M+8 Pixel bis zum letzten Tiefenbildpixel fort.

Die räumliche Trennung von Pfadkostenberechnung (Rekursion) R und Kostenaggregation A birgt zusätzlich die Notwendigkeit einer Zwischenspeicherung der lokalen Verschiedenheitsfunktion $C_{i,j}$ zwischen ihrer Berechnung im Zuge der Pfadkostenrekursion und der M+8 Pixel später erfolgenden Kostenaggregation. Dazu bietet sich die Verwendung eines weiteren Ringpuffers $C_\zeta$ mit jetzt M+8 Startadressen für Kostenfunktionen bestehend aus DR Wörtern mit einer Bittiefe von jeweils $CD$ an. Der Adressindexraum $\zeta$ dieses Ringpuffers ist mit der Bildpixel-Indizierung verknüpft über die Beziehungen $\zeta_R = a_R \% (M+8)$ und $\zeta_A = a_A \% (M+8)$. Während der Pfadkostenrekursion wird nun auch stets die Adresse $\zeta_R$ des Ringpuffers $C_\zeta$ mit der lokalen Verschiedenheitsfunktion am Pixel $a_R$ beschrieben, um schließlich seine Adresse $\zeta_A$ im Zuge der Kostenaggregation zu lesen. Damit wird die aggregierte Kostenfunktion zu

$$S_{i_A, j_A} = \#_P \cdot C_{\zeta_A} + \sum_{m = \gamma_A - M}^{\gamma_A - M + 3} P_m + \sum_{m = \gamma_A + M}^{\gamma_A + M + 3} P_m$$

Auch diese Ausführung ist im Prinzip für sich alleine oder in beliebiger Kombination mit den oben beschriebenen Ausführungen einsetzbar.

Aus einer Detailanalyse der Funktionsweise der Pfadkosten hat die Erfindung erkannt, dass auch ein nichtrekursiver Ansatz möglich ist, der die Vorteile der Rauschminderung des SGM mit vollwertigen über den gesamten Winkelraum (360°) gleichverteilten Glattheitspfaden auf schlanken Zielsystemen vereint.

Die Analyse ergibt, dass Disparitätssprünge entlang Glattheitspfaden zunächst vorgemerkt werden, um sich dann erst nach mehrmaliger Wiederholung entlang eines Pfades in Form eines Disparitätsminimums der Pfadkostenfunktion durchzusetzen. Mit geeigneten Parametern der Tiefenbildberechnung wird so ein Gedächtnis eines Pfades erzeugt, dass nach typischerweise zweimaliger Wiederholung einer geänderten Disparität zu deren Durchbruch verhilft.

Ebendiese charakteristische Gedächtnisfunktion eines Glattheitspfades kann nun genutzt werden, um eine nichtrekursive Variante des SGM zu implementieren, die auch auf schlanken Zielsystemen mit der gleichen rauschmindernden Wirkung Glattheit aus allen Bildrichtungen erzwingt - inklusive der dunklen Halbebene eines Bildes. Kern dieser Variante des erfindungsgemäßen Verfahrens ist eine Struktur der Glattheitspfade, die sich zu jedem interessierenden Pixel hin über 1-3 weitere Pixel (anstatt rekursiv über das gesamte Bild hinweg) aufbauen. In ihrer Wirkung sind diese nichtrekursiven Pfade gleichwertig mit rekursiven Pfaden nach dem Stand der Technik, jedoch können sie auch in Bildrichtungen reichen, in denen die helle Halbebene der Bildaufnahme nur wenige (1-3) Pixel breit ist.

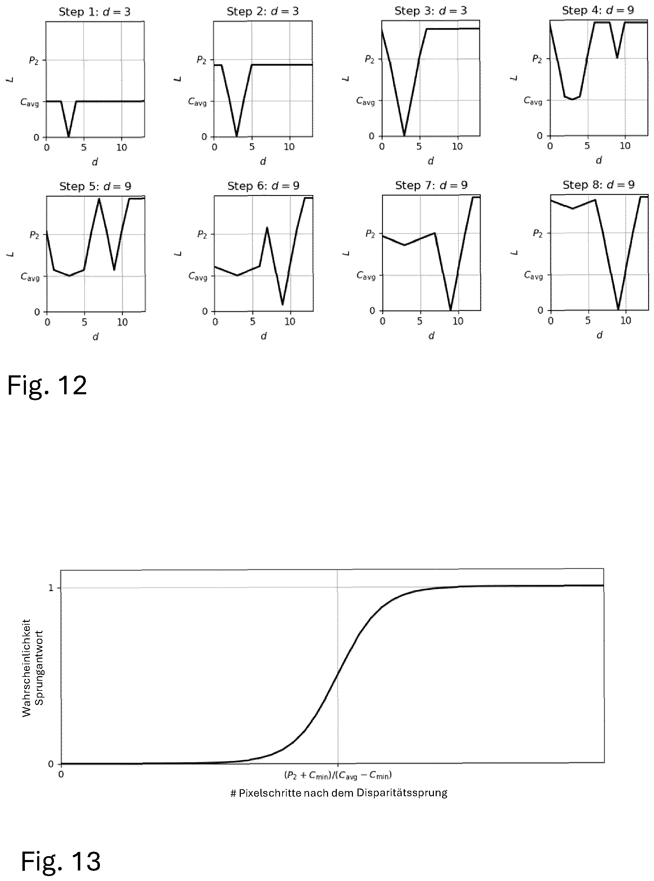

Für ein genaueres Verständnis der Funktionsweise von Glattheitspfaden ist das Beispiel eines einfachen Disparitätssprungs entlang eines Pfades hilfreich. In Fig. 12 ist dazu der Verlauf der Pfadkosten eines Pfades über acht Pixel angegeben, während zwischen dem dritten und vierten Pixel ein Disparitätssprung von $d=3$ nach $d=9$ erfolgt. Als Verschiedenheitsfunktion $C$ wird hier beispielhaft eine Hammingdistanz der Censustransformation zweier 5x5 Pixelblöcke verwendet, die den Mittelwert $C_{avg}=12$ hat und im Falle einer perfekten Stereokorrespondenz den Wert 0 annimmt. Sprungsanktionen seien hier angelehnt an performanceoptimiertes Census-Hamming-SGM auf 5x5 Pixelblöcken bei-spielhaft mit $P_1=1$ und $P_2=26$ angenommen.

Dieses Beispiel soll Einblick in die charakteristische Sprungantworttiefe eines SGM-Glattheitspfades geben. Dies ist eine Funktion, die die Sprungwahrscheinlichkeit der berechneten Disparität nach einem tatsächlichen Disparitätssprung abhängig von der Anzahl der nach diesem Sprung entlang eines Glattheitspfades durchlaufenen Pixel beschreibt (vgl. Fig. 13).

Die Fig. 13 zeigt die Sprungantwort der Pfadkosten # Pixel nach einem Disparitätssprung: Das Verhältnis der Sanktion P2 zur mittleren Verschiedenheitsfunktion $C_{avg}$ bestimmt maßgeblich den Pixelabstand #, ab dem eine Sprungantwort wahrscheinlich ist. Bis zu diesem Abstand werden Disparitätsänderungen nur in Pfadkosten vorgemerkt. Eine nichtrekursive SGM-Implementierung muss diesem Antwortverhalten genügen. Die Breite der Sprungantwortfunktion ist bestimmt durch die Varianz der Verschiedenheitsfunktion C.

Damit verbunden ist die Frage, über wie viele Pixel sich nichtrekursive SGM-Glattheitspfade erstrecken müssen, um eine gleichwertige Wirkung zu erzeugen wie rekursive SGM-Glattheitspfade.

Die Pfadkostenfunktion $L$ zeigt zunächst ein starkes Minimum bei der Disparität $d=3$. Nach dem Disparitätssprung wird ein lokales Minimum bei $d=9$ *vorgemerkt,* während das bisherige Minimum auf das Niveau $C_{avg}$ angehoben wird und dort so lange verharrt und sich dabei schrittweise verbreitert, bis das Kostenminimum des neuen Disparitätsniveaus sich durch Wiederholung und mehrfache Bestätigung zum globalen Minimum ausgewachsen hat. Mit der hier idealisiert als 0 angenommenen minimalen Kostenfunktion $C_{min}$ kann man aus diesem Beispiel eine charakteristische Sprungantworttiefe eines Glattheitspfades von $(P_2+C_{min})/(C_{avg}-C_{min})$ Pixeln ableiten (vgl. Fig. 13).

Für die optimierten SGM-Parameter in diesem Beispiel beträgt die Sprungantworttiefe demnach ungefähr 2,5 Pixel. Das legt nahe, dass nichtrekursive Glattheitspfade dieser Länge eine gleichwertige Wirkung erzeugen wie rekursive Pfade. Daraus lässt sich im Rahmen eines weiteren erfindungsgemäßen Verfahrens beispielhaft folgende nichtrekursive und für schlanke Zielsysteme geeignete SGM-Implementierung ableiten:

Analog dem Subsampling-Ansatz einer Ausführung des erfindungsgemäßen Verfahrens findet auch hier eine Vererbung in Pixelblöcken bei der Kostenaggregation statt. Jedoch entfällt die Notwendigkeit, Glattheitspfade über die Bildebene hinweg zu arrangieren. Die Pfade α, β, und γ konstituieren sich bei dieser Ausführung jeweils erst in dem Moment, in dem die Pfadkosten für einen neuen Pixelblock aggregiert werden. Einmal berechnet werden Pfadkosten in diesem Ansatz jedoch zwischengespeichert und werden dann mehrfach und auch für verschiedene Pfadrichtungen verwendet.

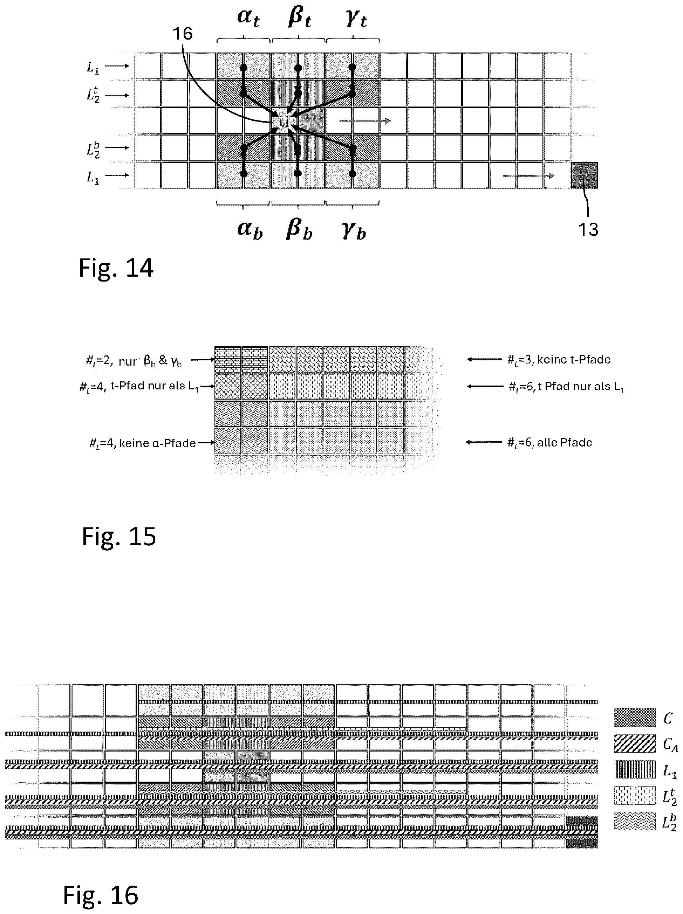

Zu unterscheiden sind im nichtrekursiven 360° SGM fünf Datenarrays und/oder Ringpuffer, deren Größe in Fig. 16 veranschaulicht ist. Für eine einfache Ringpuffer-Architektur ist es zweckmäßig - wenngleich nicht zwingend - die Parität der Tiefenbild-Spaltenzahl M auf gerade Zahlen einzuschränken. Dies soll in der folgenden Beschreibung o.B.d.A. angenommen werden.

i. Ein Array der pixelweisen lokalen Verschiedenheitsfunktionen $C_\xi$. Hier werden $2M+12$ Adressen der Bittiefe $DR \cdot CD$ benötigt - mit Adressindex $\xi(a_{i,j})=a_{i,j}\%(2 \cdot M+12)$), wobei der Bildpixelindex $a_{i,j}=i \cdot M+j$ hier für alle Puffer deren jeweiligem Adressindex zugeordnet wird.

ii. Ein Array gemittelter lokaler Verschiedenheitsfunktionen $C_{A,\varepsilon}$ jeweils horizontal benachbarter Pixelpaare - mit Adressindex $\varepsilon(a_{i,j})=(a_{i,j}/2)\%((3\cdot M+14)/2))$. Hier werden (3 M+14)/2 Adressen der Bittiefe $DR\cdot CD$ benötigt.

iii. Ein Array mit noch richtungsunspezifischen Pfadkosten ersten Entwicklungsgrades $L_{1,v}$ - mit Adressindex $v(a_{i,j})=(a_{i,j}/2)\%((4\cdot M+14)/2))$, in dem der Mittelwert jeweils zweier horizontal benachbarter Verschiedenheitsfunktionen Hirschmüllers Minimierungskalkül unterworfen wird:

$$L_{1,v(a_{i,j})} = \min\left(C_{A,\varepsilon(a_{i,j})}(d), C_{A,\varepsilon(a_{i,j})}(d\pm 1) + P_1, \min_{m}\left(C_{A,\varepsilon(a_{i,j})}(m)\right) + P_2\right)$$

Dieser richtungsunspezifische Pfadkostenpuffer muss sich über insgesamt etwas mehr als vier Bildzeilen erstrecken, um jeweils Pfadinformation übernächster Nachbarn eines interessierenden Pixels in alle Bildrichtungen bereitstellen zu können. Durch die Mittelung über jeweils zwei pixelweise Verschiedenheitsfunktionen $C$ ergibt sich damit eine Puffergröße von (4 M+14)/2 Adressen der Bittiefe $DR\cdot CD$.

iv. Zwei Arrays mit nun richtungsspezifischen - jeweils nach oben oder unten ausgerichteten - Pfadkosten zweiten Entwicklungsgrades $L_{2,\mu}{}^t$ bzw. $L_{2,\mu}{}^b$ - mit Adressindex $\mu(a_{i,j})=(a_{i,j}/2)\%5$. Diese Pfadkosten zweiten Entwicklungsgrades verwenden die Pfadkosten ersten Entwicklungsgrades der jeweils zwei Pixel über ($t$: top) bzw. unter ($b$: bottom) einem interessierenden Pixel liegenden Pixelpaare als Pfadquelle und unterziehen diese gemeinsam mit dem Mittelwert der Verschiedenheitsfunktion eines Pixelpaares über ($t$) bzw. unter ($b$) einem interessierenden Pixel Hirschmüllers Minimierungskalkül. Mit einer Funktion

$$Z_{i,j}^{\mp}(d) = C_{A,\varepsilon(a_{i,j})}(d) + L_{1,v(a_{i,j}\mp M)}(d)$$

folgt

$$L_{2,\mu(a_{i,j})}^{t} = \min\left(Z_{i,j}^{-}(d), Z_{i,j}^{-}(d\pm 1) + P_1, \min_{m}\left(Z_{i,j}^{-}(m)\right) + P_2\right)$$

und

$$L_{2,\mu(a_{i,j})}^{b} = \min\left(Z_{i,j}^{+}(d), Z_{i,j}^{+}(d\pm 1) + P_1, \min_{m}\left(Z_{i,j}^{+}(m)\right) + P_2\right).$$

Die Puffergröße beträgt hier jeweils nur 5 Adressen der Bittiefe $DR\cdot CD$, denn diese Pfadkosten zweiten Entwicklungsgrades müssen nur für die Dauer der Berechnung jeweils dreier Zweier-Pixelblöcke gespeichert bleiben und hinreichend groß sein, um beim Wechsel von einem Zweier-Pixelblock zum nächsten bereits alle dafür notwendigen Pfadkosten fertig berechnet zu haben.

Die Fig. 14 zeigt eine Veranschaulichung der Kostenaggregation im nichtrekursiven 360° SGM. Glattheitspfade propagieren hier nicht mehr über die gesamte Bildfläche, sondern erstrecken sich von ihrem Ursprung bis zur Kostenaggregation über 3 Pixel. Ein interessierendes Pixel 11 der Zeile i und der Spalte j erbt dabei Pfadinformation aus den darüber- bzw. darunterliegenden beiden Bildzeilen per Kostenfunktions-Minimierungskalkül nach Hirschmüller. Die beiden grau hervorgehobenen Pixel des aktuellen Pixelblocks der Kostenaggregation erben Pfadinformation aus den jeweils gekennzeichneten Blöcken $\alpha$ (von links), $\beta$ (vertikal) und $\gamma$ (von rechts), sowohl von oben ($t$: top) als auch von unten ($b$: bottom). Bei der Pfadkostenberechnung werden im Beispiel jeweils die Verschiedenheitsfunktionen zweier horizontal benachbarter Pixel gemittelt. Ist die Kostenaggregation und Disparitätsberechnung in einem Zweier-Pixelblock abgeschlossen, so verschieben sich Pixelblock und Pfadquellen um jeweils zwei Pixel in Ausleserichtung (graue Pfeile). Um Block-Matching und die rechtzeitige Berechnung aller Pfadkosten zu gewährleisten, eilt die Erfassung der neuesten Verschiedenheitsfunktion C im Ringpuffer dem Kostenaggregationsblock um 8 Spalten voraus, was durch das Pixel vorauseilender Matching- und Pfadkostenberechnung 13 in Fig. 14 verdeutlicht ist.

Die zweistufige Pfadkostenberechnung beruht jeweils auf über horizontal benachbarte Pixelpaare gemittelten Verschiedenheitsfunktionen C. Aus diesen gemittelten Verschiedenheitsfunktionen propagieren Pfadkosten vom ersten zum zweiten Entwicklungsgrad hin stets vertikal, so dass sie für alle Pfadrichtungen verwendet werden können. Die Kostenaggregation schreitet in jedem Zweier-Pixelblock mit der Ausleserichtung der Kamerachips von links nach rechts voran, und sobald von einem Pixelblock zum nächsten gesprungen wird, verschieben sich auch die Pfadzuordnungen. $\gamma$-Pfade werden für den nachfolgenden Pixelblock zu $\beta$-Pfaden, $\beta$-Pfade werden zu $\alpha$-Pfaden, und der nächste in Ausleserichtung (rechts) benachbarte Pixelblock wird zur Quelle eines $\gamma$-Pfades. Formal lässt sich die Kostenaggregation im Tiefenbildpixel *i,j* mit Hilfe der oben definierten Ringpuffer und ihrer Indizierung folgendermaßen beschreiben:

$$S_{i,j} = \#_L \cdot C_{\xi(a_{i,j})} + \sum_{k=-1}^{1} L^t_{2,\mu(a_{i,j}-M+2k)} + \sum_{k=-1}^{1} L^b_{2,\mu(a_{i,j}+M+2k)}$$

Auch hier beschreibt die ganze Zahl $\#_L$ die Anzahl der der lokalen Verschiedenheitsfunktion *C* gegenüberstehenden Pfadkosten. Im Regelfall (außer an Bildrändern) beträgt sie in dieser Implementierung $\#_L$=6. Für jeweils die beiden Bildpixel am linken bzw. rechten Bildrand können keine Pfade $\alpha_{t/b}$ (links) bzw. $\gamma_{t/b}$ (rechts) für die Kostenaggregation berücksichtigt werden. Dort beträgt $\#_L$=4 und die $\alpha$-Pfade (links) bzw. $\gamma$-Pfade (rechts) müssen aus der Pfadsumme herausgenommen werden.

Für die oberste Bildzeile existieren keine Top-Pfade, dort ist $\#_L$=3. In der zweitobersten Bildzeile reduzieren sich die Top-Pfade auf $L_1^t$, womit aber $\#_L$=6 dort erhalten bleibt. Analog beträgt in der untersten Bildzeile $\#_L$=3, und in der Zweituntersten mit auf $L_1^b$ reduzierten Bottom-Pfaden gilt auch hier $\#_L$=6.

Die Fig. 15 zeigt eine Visualisierung dieser Rand- und Eckbetrachtung der Kostenaggregation beim nichtrekursiven 360° SGM, hier beispielhaft für die obere linke Bildecke. Das Gewicht $\#_L$ der lokalen Verschiedenheitsfunktion C entspricht immer der Anzahl der ihr jeweils in der Kostenaggregation gegenüberstehenden Pfadkosten. Diese Betrachtungen gelten analog (um Bild-Hauptachsen gespiegelt) für die drei weiteren Bildecken - dann mit entsprechend angepassten Pfaden.

Die Kostenaggregation beschreibt die Art und Weise, in der die oben definierten Ringpuffer für Verschiedenheitsfunktionen *C* und Pfadkosten ersten und zweiten Entwicklungsgrades *L* gelesen werden. Ihr Schreibvorgang und die damit verbundenen Pfadkostenberechnungen müssen hingegen stets abgeschlossen sein, sobald sie gelesen werden. Dies begründet die in Fig. 16 (wie auch schon in Fig. 11 und Fig. 14) gezeigten und der Kostenaggregation stets in Ausleserichtung hin vorauseilenden Pufferköpfe.

Der Pufferkopf $C_\xi$ eilt dem interessierenden Pixel der Kostenaggregation stets um $2 \cdot M$+12 Bildpixel voraus. Damit soll gewährleistet werden, dass auch nach einem Sprung der Kostenaggregation von einem Zweier-Pixelblock zum nächsten zunächst seine Verschiedenheitsfunktion per Block-Matching berechnet und paarweise gemittelt werden kann, um diese sogleich zur Berechnung von sowohl $L_1$ im aktuellen Pixelpaar als auch $L_2$ im darüberliegenden Pixelpaar zu verwenden, bevor $L_2$ der Kostenaggregation zugeführt wird. Während der Kostenaggregation im Pixel *i,j* kann dann der Pufferkopf der unteren Pfadkosten zweiten Entwicklungsgrades $L_2^b$ zum dem Pixel *i,j* um $M$+8 Pixel vorauseilenden Bildpixel beschrieben werden. Der Pufferkopf der oberen Pfadkosten zweiten Entwicklungsgrades $L_2^t$ zum dem Pixel *i,j* um M-8 Pixel nacheilenden Bildpixel kann ebenfalls zu diesem Zeitpunkt beschrieben werden. Da sich Pfadkosten hier stets über Pixelpaare erstrecken kann die Berechnung dieser beiden Pfadkosten zweiten Entwicklungsgrades jeweils beliebig innerhalb der Zeit erfolgen, während der die Kostenaggregation in den beiden Pixeln eines Pixelblocks erfolgt. Danach findet wieder ein Sprung zum nächsten Zweier-Pixelblock statt, der dann bereits die soeben berechneten und gespeicherten Pfadkosten zweiten Entwicklungsgrades verwendet. Die Definition und Indizierung der hier verwendeten Ringpuffer ermöglicht ein zyklisches und automatisches Überschreiben, sobald die Daten im jeweiligen Puffer nicht mehr benötigt werden.

Der wesentliche Berechnungsaufwand der Pfadkosten beträgt in der hier beschriebenen nichtrekursiven 360° SGM-Implementierung drei Pfadkostenberechnungen pro zwei Bildpixel - eine $L_1$-Berechnung, die aufgrund ihres ungerichteten Charakters sowohl für nach oben wie auch nach unten gerichtete Pfade verwendet werden kann, und die beiden von oben (t) und unten (b) auf eine interessierende Pixelzeile zulaufenden $L_2$-Berechnungen. Damit ist der Berechnungsaufwand ungefähr um einen Faktor 3/2 größer als für die oben beschriebenen (und nur auf Halbebenen-Bildinformation basierenden) Ansätze. Gleichzeitig ist er etwa um einen Faktor 3/8 kleiner als konventionelles SGM auf einer Halbebene mit vier Glattheitspfaden. Bei über den gesamten Winkelraum nahezu gleichverteilten Glattheitspfaden ist er mit diesem Ressourcenbedarf immer noch robust in schlanken Embedded-Zielsystemen implementierbar.

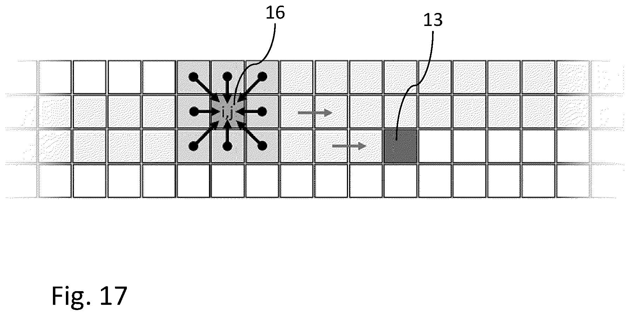

Eine in der Fig. 17 veranschaulichte besonders einfache Ausführung des erfindungsgemäßen Verfahrens nutzt die Erkenntnis, dass auch schon bei nichtrekursiven Pfadlängen unterhalb der charakteristischen Sprungantworttiefe eine rauschmindernde Wirkung von Glattheitsbedingungen eintritt. So ist mit den acht Pfaden jeweils ersten Entwicklungsgrades, die jeweils nur bis zu allen direkten Nachbarn eines interessierenden Pixels 16 reichen, die Speicher- und Berechnungslast einer nichtrekursiven 360° SGM-Implementierung in gleicher Weise reduzierbar wie in der rekursiven pseudo 360° Ausführung des erfindungsgemäßen Verfahrens.

Die nachfolgende Tabelle verdeutlich den Speicherbedarf in Äquivalenten der Speicherung von Kostenfunktions-Bildzeilen (Speichereinheiten), den Berechnungsaufwand in Einheiten der Kostenfunktionsberechnung pro Pixel (Takteinheiten) und die enthaltenen Pfad-Winkelinformationen von vier verschiedenen Ausführungen der Erfindung im Vergleich zum Stand der Technik mit vier Pfaden.

| SGM Algorithmus | Speicher | Takte | Pfad-Winkelinformation |
|---|---|---|---|
| | [Cost Fcn. Rows] | [Cost Calc. / Pix] | [°] |
| 4-Pfad SGM nach SdT | 3 | 4 | 180 |
| -n/8 rad gedreht subsampled 4-Pfad SGM | 1 | 1 | 180 |
| -n/8 rad gedreht pseudo 360° 8-Pfad SGM | 3 | 1 | Pseudo 360 |
| nichtrekursives 360° SGM 6-Pfade, 2. Entwicklungsgrad | 5.5 | 1.5 | 360 |
| nichtrekursives 360° SGM 8 Pfade, 1. Entwicklungsgrad, nächste Nachbarn | 3 | 1 | 360 |

Hier ist erkennbar, dass alle Ausführungen der Erfindung gegenüber dem Stand der Technik zumindest wesentlich weniger Rechenaufwand benötigen, so dass der Einsatz auch in schlanken Systemen, beispielsweise in sog. Embedded Systemen, ermöglicht ist. Unter gleicher Pfad-Winkelinformation zeigt sich, dass alle Ausführungen zumindest gleich viel oder weniger Speicherbedarf besitzen.

Die Erfindung stellt somit eine grundlegende Verbesserung der Tiefenbildberechnung dar, die eine schnellere und ressourcenschonende Berechnung von Tiefenbildern ermöglicht.

**Bezugszeichenliste**

1     Vorrichtung zur Berechnung von Tiefenbildern
2     Beleuchtungsquelle
3     Lichtkegel
4     Bildbereich
5     erste Kamera
6     zweite Kamera
7     Auswerteeinheit
8     Stereobildpaar
9     rechtes Bild
10    linkes Bild
11    interessierendes Pixel
12    quadratischer Block
13    Pixel vorauseilender Kostenberechnung
14    Einheitszelle
15    Ringpufferende
16    aktuelles Pixel für Aggregation
17    Block für Aggregation
18    Ringpufferstart

**Patentansprüche**

1.  Verfahren zur Erzeugung von Tiefenbildern, wobei mit wenigstens zwei Kameras (5, 6) Bilder einer Szene (4) aufgenommen werden, wobei die Kameras (5, 6) jeweils einen Bildsensor aufweisen, der pixelweise ausgelesen wird, wobei aus inhaltlichen Korrespondenzen zwischen den Bildern eine Tiefeninformation abgeleitet wird, wobei zur Bestimmung der inhaltlichen Korrespondenzen semiglobale Glattheitsbedingungen verwendet werden,
**dadurch gekennzeichnet,**

dass die Tiefenberechnung zu jedem Pixel entlang der Ausleserichtung der beiden Kameras (5, 6) fortschreitet, dass jeweils für eine ganze Zahl k>1 entlang der Ausleserichtung benachbarter Pixel die rekursive Berechnung der Pfadkosten eines jeden der N≥k eindimensionalen Glattheitspfade einmalig an einem dieser k Pixel erfolgt, und

**dass** eine Kostenaggregation für jedes Pixel dieses k-Tupels sich aus seiner lokalen Kostenfunktion sowie aus allen N auf das k-Tupel entfallenden Pfadkostenfunktionen zusammensetzt.

2. Verfahren nach Anspruch 1, **dadurch gekennzeichnet, dass** die Anzahl N der Pfadrichtungen ganzzahlig teilbar ist durch die Anzahl k der Pixel eines k-Tupels der Kostenaggregation und/oder dass die N Pfadrichtungen sich gleichmäßig auf die jeweils k Pixel eines k-Tupels verteilen, insbesondere wobei N=4 gilt.

3. Verfahren nach Anspruch 1 oder 2, **dadurch gekennzeichnet, dass** die Anzahl k der Pixel eines k-Tupels identisch ist zur Anzahl N der Pfadrichtungen, insbesondere wobei jedem Pixel eines k-Tupels eine der N Pfadrichtungen zugeordnet ist, insbesondere wobei N=k=4 gilt und/oder die N Pfadrichtungen in jedem k-Tupel in einer festgelegten Reihenfolge den Pixeln zugeordnet sind.

4. Verfahren nach einem der vorangehenden Ansprüche, **dadurch gekennzeichnet, dass** die N Pfadrichtungen so gewählt sind, dass (bei bildzeilenweiser Auslesung) entlang jeder der N Pfadrichtungen der nächste Pfadnachbar zur jeweils berechneten Bildzeile außerhalb dieser Bildzeile liegt.

5. Verfahren nach einem der vorangehenden Ansprüche, **dadurch gekennzeichnet, dass** die Winkel zwischen den N Pfadrichtungen im Wesentlichen gleich und/oder in der Halbebene bekannter Bildinformation gleichverteilt sind.

6. Verfahren nach einem der vorangehenden Ansprüche, **dadurch gekennzeichnet, dass** Glattheitspfade sich, vorzugsweise möglichst geradlinig, über die Bildfläche fortsetzen, wobei dies insbesondere im Fall N=k=4 durch vier Glattheitspfade realisiert ist, deren zwei Glattheitspfade jeweils um $\pm 2$ Pixelspalten pro Bildzeile propagieren, und deren zwei verbleibende Glattheitspfade sich durch eine Sprungsequenz auszeichnen, die sich periodisch wiederholend jeweils um $\{\pm 1, \mp 1, \pm 2\}$ Spalten pro Bildzeile propagiert.

7. Verfahren nach einem der vorangehenden Ansprüche, **dadurch gekennzeichnet, dass** die Einteilung der jeweils k benachbarten Pixel eines k-Tupels durch maximale Richtungstreue geleitet ist, wobei dies insbesondere im Fall N=k=4 durch einen Halbverband aus k-Tupeln realisiert ist, deren linkes und rechtes Randpixel jeweils am stärksten nach rechts beziehungsweise links ausgerichtete Pfadkosten weiterführen.

8. Verfahren nach einem der vorangehenden Ansprüche, **dadurch gekennzeichnet, dass** die Kostenaggregation der Pfadkostenberechnung um eine Bildzeile entlang der Ausleserichtung nacheilen kann und der Kostenaggregation dadurch Pfadinformation entgegen der Ausleserichtung erschließt, wobei bereits berechnete Pfadkosten sowohl aus der Kostenaggregation entlang der Ausleserichtung vorgelagerten als auch nachgelagerten Bildzeilen zur Kostenaggregation verwendet werden.

9. Verfahren nach dem Oberbegriff des Anspruch 1, **dadurch gekennzeichnet, dass** die Tiefenberechnung zu jedem Pixel entlang der Ausleserichtung der beiden Kameras fortschreitet,

dass die Aggregation der Pfadkosten pro Pixel sich aus nichtrekursiv berechneten Glattheitspfaden definierter Pfadlänge speist, und

dass die Kostenaggregation eines Pixels sich aus seiner lokalen Kostenfunktion, sowie aus den Pfadkostenfunktionen aller zu diesem Pixel hinführenden Glattheitspfade zusammensetzt.

10. Verfahren nach Anspruch 9, **dadurch gekennzeichnet, dass** sich die Pfadlänge an der charakteristischen Sprungantworttiefe der Pfadkostenfunktion orientiert.

11. Verfahren nach Anspruch 9 oder 10, **dadurch gekennzeichnet, dass** sich die nichtrekursiv berechneten Glattheitspfade von einem Pfadursprung hin zum Zielpixel der Kostenaggregation in ihrem Entwicklungsgrad schrittweise erhöhen, wobei Pfadkosten eines jeweiligen Entwicklungsgrades sowohl für verschiedene Pfadrichtungen als auch für verschiedene Zielpixel modular und vielfach verwendet werden, insbesondere wobei Pfadkosten des ersten Entwicklungsgrades richtungsunabhängig vielfach, insbesondere für verschiedene Zielpixel, verwendet werden.

12. Verfahren nach einem der Ansprüche 9 bis 11, **dadurch gekennzeichnet, dass** die zur Berechnung der Pfadkosten verwendeten lokalen Kostenfunktionen jeweils über mehrere Pixel gemittelt werden, wobei vorzugsweise jeweils über zwei entlang der Ausleserichtung benachbarte Pixel gemittelt wird.

**13.** Verfahren nach einem der Ansprüche 9 bis 12, **dadurch gekennzeichnet, dass** zur Kostenaggregation innerhalb eines in Ausleserichtung benachbarten Pixelpaares jeweils drei pixelpaarweise gemittelte und für verschiedene Glattheitspfade und Zielpixel mehrfach zu verwendende Glattheitspfade zweiten Entwicklungsgrades senkrecht von oben (z.B. in Ausleserichtung) und von unten (z.B. entgegen der Ausleserichtung) kommend auf das Pixelpaar zulaufen, wobei die Kostenaggregation jedes Pixels dieses Pixelpaares sich aus seiner lokalen Kostenfunktion sowie aus den benannten sechs Pfadkostenfunktionen der zu diesem Pixel hinführenden Glattheitspfade zusammensetzt.

**14.** Verfahren nach Anspruch 13, **dadurch gekennzeichnet, dass** bei Fortschreiten der Kostenaggregation entlang der Ausleserichtung von einem Pixelpaar zum nächsten Pixelpaar einmal berechnete Glattheitspfade in Gänze dreifach wiederverwendet werden, so dass sie stets, insbesondere bei bildzeilenweiser Auslesung von links oben nach rechts unten, jeweils zunächst als aus halbrechter Richtung, dann aus senkrechter Richtung und schließlich aus halblinker Richtung kommend auf das Pixelpaar der Kostenaggregation zustreben.

Fig. 1

dissimilarity

disparity

6 5 4 3 2 1 0

Fig. 2

Fig. 3

Fig. 4

Fig. 5

Fig. 6

Fig. 7

Fig. 8

Fig. 9          Fig. 10

Fig. 11

Fig. 12

Fig. 13

Fig. 14

Fig. 15

Fig. 16

Fig. 17

Europäisches
Patentamt

European
Patent Office

Office européen
des brevets

# EUROPÄISCHER RECHERCHENBERICHT

Nummer der Anmeldung

EP 23 20 7739

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHAO LI ET AL: "Double Propagation Stereo Matching for Urban 3-D Reconstruction From Satellite Imagery", IEEE TRANSACTIONS ON GEOSCIENCE AND REMOTE SENSING, IEEE, USA, Bd. 60, 25. Februar 2021 (2021-02-25), Seiten 1-17, XP011892337, ISSN: 0196-2892, DOI: 10.1109/TGRS.2021.3058144 [gefunden am 2021-12-03] | 9,10,12 | INV. G06T7/593 |
| A | * Abbildung 2 * * Kapitel III.C, Abschnitt "2) Internal Propagation" * ----- | 1-8,11, 13,14 | |
| X | RUF BOITUMELO ET AL: "Towards real-time change detection in videos based on existing 3D models", PROCEEDINGS OF SPIE; [PROCEEDINGS OF SPIE ISSN 0277-786X VOLUME 10524], SPIE, US, Bd. 10004, 18. Oktober 2016 (2016-10-18), Seiten 100041H-100041H, XP060081055, DOI: 10.1117/12.2241992 ISBN: 978-1-5106-1533-5 | 9,12 | |
| | | | RECHERCHIERTE SACHGEBIETE (IPC) |
| A | * Kapitel 5, Abschnitte "Test Data" und "Depth Estimation" * ----- | 1-8,10, 11,13,14 | G06T |
| | -/-- | | |

Der vorliegende Recherchenbericht wurde für alle Patentansprüche erstellt

| Recherchenort | Abschlußdatum der Recherche | Prüfer |
|---|---|---|
| München | 28. März 2024 | Kollreider, Klaus |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes
Dokument

EPO FORM 1503 03.82 (P04C03)

Europäisches
Patentamt

European
Patent Office

Office européen
des brevets

**EUROPÄISCHER RECHERCHENBERICHT**

**Nummer der Anmeldung**

**EP 23 20 7739**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| T | CHEN GANG ET AL: "StereoEngine: An FPGA-Based Accelerator for Real-Time High-Quality Stereo Estimation With Binary Neural Network", IEEE TRANSACTIONS ON COMPUTER-AIDED DESIGN OF INTEGRATED CIRCUITS AND SYSTEMS, IEEE, USA, Bd. 39, Nr. 11, 2. Oktober 2020 (2020-10-02), Seiten 4179-4190, XP011818395, ISSN: 0278-0070, DOI: 10.1109/TCAD.2020.3012864 [gefunden am 2020-10-28] * Kapitel III.B, Absätze 3-4; Gleichung 4 * | | |

-----

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 28. März 2024 | Kollreider, Klaus |

EPO FORM 1503 03.82 (P04C03)

**Seite 2 von 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **H. HIRSCHMÜLLER**. *IEEE Conference on Computer Vision and Pattern Recognition*, 2005, 807-814